# EUROPEAN PATENT APPLICATION

(11) **EP 3 252 598 A2**
(43) Date of publication of application: **06.12.2017**
(21) Application number: 17172402.4
(22) Date of filing: 23.05.2017
(51) Int. Cl.: G06F 9/44, G06F 9/445

(54) **INFORMATION PROCESSING DEVICE, INFORMATION PROCESSING METHOD, AND INFORMATION PROCESSING SYSTEM**

(30) Priority: 30.05.2016 JP 2016107914
(71) Applicant: Ricoh Company, Ltd., Tokyo 143-8555 (JP)
(72) Inventor: TSUGAWA, Yasuhiko, Ohta-ku, Tokyo 143-8555 (JP); OHIZUMI, Takahiro, Chuo-ku, Tokyo 104-6042 (JP); KAWAMURA, Michiko, Chuo-ku, Tokyo 104-6042 (JP)
(74) Representative: White, Duncan Rohan

(57) **Abstract**

An information processing device (20) includes a first obtaining unit (200), a second obtaining unit (201), an extracting unit (202), and an applying unit (203). The first obtaining unit (200) is configured to obtain first setting items in a first model (MFP001) and obtain second setting items in a second model (MFP002) different from the first model (MFP001). The second obtaining unit (201) is configured to obtain a setting value of each of the first setting items. The extracting unit (202) is configured to extract, as a common setting item, a setting item having common definition in the first setting items and in the second setting items. The applying unit (203) is configured to apply, to the common setting item, the setting value corresponding to the first setting item from which the extracting unit (202) has extracted the common setting item.

## Description

### BACKGROUND OF THE INVENTION

### 1. Field of the Invention

The present invention relates to an information processing device, an information processing method, and an information processing system.

### 2. Description of the Related Art

A multifunction printer in which the printing function, the scanning function, the photocopying function, and the FAX function are implemented in a single housing is widely used. Moreover, there is a known management application that is a computer program meant for making a multifunction printer to output setting information to be used to perform setting of the functions of the multifunction printer, and for incorporating and managing the setting information in a computer (For example, Japanese Unexamined Patent Application Publication No. 2008-271475). Then, the management application can transfer the incorporated setting information to another multifunction printer and apply the transferred setting information to the other multifunction printer.

The conventional management application is based on the premise that the setting information is copied in a multifunction printer of the same model as the model in which the setting information has been incorporated. For that reason, in the conventional management application, it becomes a difficult task to properly copy the setting information in a multifunction printer of a different model from the model in which the setting information has been incorporated. For example, among different models, sometimes the parameters included in model setting information have different names in spite of having the same definition or sometimes the model setting information has different formats. Typically, it is difficult to tackle such cases.

The present invention has an object to provide an information processing device, an information processing method, and an information processing system that are capable of making it easier to manage the setting information among different models.

### SUMMARY OF THE INVENTION

According to one aspect of the present invention, an information processing device (20) includes a first obtaining unit (200), a second obtaining unit (201), an extracting unit (202), and an applying unit (203). The first obtaining unit (200) is configured to obtain first setting items in a first model (MFP001) and obtain second setting items in a second model (MFP002) different from the first model (MFP001). The second obtaining unit (201) is configured to obtain a setting value of each of the first setting items. The extracting unit (202) is configured to extract, as a common setting item, a setting item having common definition in the first setting items and in the second setting items. The applying unit (203) is configured to apply, to the common setting item, the setting value corresponding to the first setting item from which the extracting unit (202) has extracted the common setting item.

### BRIEF DESCRIPTION OF THE DRAWINGS

FIG. 1 is a block diagram illustrating an exemplary configuration of an information processing system according to an embodiment;
FIGS. 2A and 2B are flowcharts each for explaining a fundamental flow of a copying operation according to the embodiment for copying setting information;
FIG. 3 is a block diagram illustrating an exemplary hardware configuration of a multifunction printer (MFP) applicable to the embodiment;
FIG. 4 is a block diagram illustrating an exemplary hardware configuration of a terminal device applicable to the embodiment;
FIG. 5 is an exemplary functional block diagram for explaining the functions of the terminal device that are applicable to the embodiment;
FIG. 6 is a block diagram illustrating an exemplary hardware configuration of a server device according to the embodiment;
FIG. 7 is an exemplary functional block diagram for explaining the functions of the server device according to the embodiment
FIG. 8 is a diagram that schematically illustrates a copying operation according to the embodiment for copying setting information from a setting source device to a setting destination device;
FIG. 9 is a flowchart for explaining an example of the copying operation according to the embodiment;
FIG. 10 is a flowchart for explaining an example of a registration operation according to the embodiment for registering setting information in the server device;
FIG. 11 is a diagram illustrating an example of a login screen applicable to the embodiment;
FIG. 12 is a diagram illustrating an example of a home screen according to the embodiment;
FIG. 13 is a diagram illustrating an example of a message screen applicable to the embodiment;
FIG. 14 is a diagram illustrating an example of a details display screen applicable to the embodiment;
FIG. 15 is a diagram illustrating an example of an uploading information input screen according to the embodiment;
FIG. 16 is a diagram illustrating an example of a creation/editing setting screen according to the embodiment;
FIG. 17 is a diagram illustrating an example of a setting information selection screen according to the embodiment;
FIG. 18 is a diagram illustrating an example of an edit menu screen according to the embodiment;
FIG. 19 is a diagram illustrating an example of an editing screen according to the embodiment;
FIG. 20 is a diagram illustrating an example of an edit menu according to the embodiment;
FIG. 21 is a diagram illustrating an example of a comparison information selection screen according to the embodiment;
FIG. 22 is a diagram illustrating an example of a setting value change screen according to the embodiment;
FIG. 23 is a diagram illustrating an example in which a changed-item area according to the embodiment is displayed in the editing screen;
FIG. 24 is a diagram illustrating an example in which a comparison result area according to the embodiment is displayed in the editing screen;
FIG. 25 is a diagram illustrating an example of an attribute information editing screen according to the embodiment;
FIG. 26 is a diagram illustrating an example of a setting information copy screen according to the embodiment;
FIG. 27 is a diagram illustrating an example of a deletion screen according to the embodiment;
FIG. 28 is a flowchart for explaining an example of a storage operation according to the embodiment for storing target setting information for editing in a memory card;
FIG. 29 is a diagram illustrating an example of a storage screen according to the embodiment; and
FIG. 30 is a diagram illustrating an example of a result display screen according to the embodiment.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENT

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

### Overview of embodiment

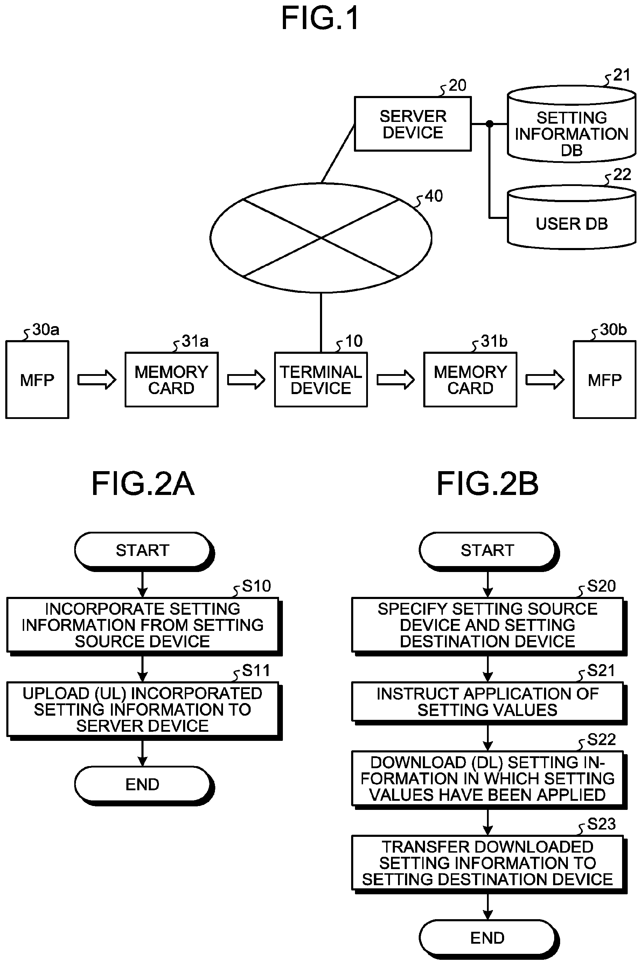

In FIG. 1 is illustrated an exemplary configuration of the information processing system according to the embodiment. The information processing system includes a terminal device 10 and a server device 20 (an example of an information processing device) that are connected to each other via a network 40. The terminal device 10 and the network 40 can be connected either using wired communication or using wireless communication. As the terminal device 10, for example, it is possible to use a commonly-used personal computer or a tablet computer. Moreover, the server device 20 either can be configured using an individual computer or can be configured in a dispersed manner among a plurality of computers connected to each other in a communicable manner.

The terminal device 10 can receive setting information from a multifunction printer (MFP) 30a via a memory card 31 a. The setting information contains setting items that can be set in the MFP 30a, and contains setting values that are set with respect to the respective setting items. Then, the terminal device 10 sends the setting information, which has been read from the memory card 31 a, to the server device 20 via the network 40. Moreover, the terminal device 10 can receive setting information, which is sent from the server device 20 via the network 40, and transfer the received setting information to an MFP 30b via a memory card 31 b. Thus, the MFP 30b can read the setting information from the memory card 31 b and update the setting information held therein.

The server device 20 is connected to a setting information database (DB) 21 and a user DB 22. The setting information DB 21 can be used to register the setting information of the MFPs 30a and 30b corresponding to the information processing system. Moreover, the setting information DB 21 is used to register, for each model (in the example illustrated in FIG. 1, for each of the MFPs 30a and 30b), a resource file that associates information indicating the definitions of the setting items specified in the setting information with identification information (called common IDs). The details regarding the resource file are described later.

Moreover, in the setting information DB 21, attribute information related to setting information can be registered in association with the particular setting information. The attribute information of setting information can contain, for example, the following: a customer name, a comment, a project code, information indicating whether or not making changes in the setting information is allowed, the range of disclosure of the setting information, the creator and the date of creation of the setting information, and the person who performed updating and the date of updating of the setting information.

The user DB 22 is used to register user information that represents the information about the users who can use the information processing system. For example, the user information contains user names and passwords. Moreover, the user information can also contain attribute information such as the professional affiliation of the users.

Meanwhile, although the explanation given above is given under the assumption that the MFPs 30a and 30b are the devices that send and receive setting information, the devices applicable to the embodiment are not limited to MFPs.

The information processing system according to the embodiment makes it easier to copy the setting information of the MFP 30a in the MFP 30b. FIGS. 2A and 2B are flowcharts each for explaining a fundamental flow of a copying operation according to the embodiment for copying the setting information. In the following explanation, the MFP 30a that represents the device from which the setting information is copied is referred to a setting source device, and the MFP 30b that represents the device in which the setting information is copied is referred to a setting destination device.

FIG. 2A is a flowchart for schematically illustrating a transfer operation for transferring the setting information from the MFP 30a, which is the setting source device, to the terminal device 10. Before the operations illustrated in FIG. 2A are performed, the memory card 31 a is installed in a memory card slot in the MFP 30a, and the setting information that is stored in the MFP 30a is transferred and stored in the memory card 31 a.

The setting information at least contains information indicating the setting source device, information indicating setting items (parameters) that can be set in the setting source device, and setting values set with respect to the respective setting items. The information indicating the setting source device contains identification information enabling individual identification of the setting source device and model information enabling identification of the model of the setting source device. Regarding each setting item specified in the setting information, there are times when the setting item has the same definition in the setting source device and the setting destination device but has different information, such as a setting item name, enabling identification of the setting item in the setting source device and the setting destination device.

In FIG. 2A, at Step S10, the terminal device 10 reads the memory card 31 a in response to a user operation, and incorporates the setting information of the setting source device as stored in the memory card 31 a. Then, at Step S11, the terminal device 10 sends the setting information of the setting source device as incorporated at Step S10 to the server device 20 via the network 40, and thus uploads (UL) the setting information. The setting information sent from the terminal device 10 is received by the server device 20 and is registered in the setting information DB 21.

FIG. 2B is a flowchart for schematically illustrating a transfer operation for transferring the setting information from the terminal device 10 to the MFP 30b representing the setting destination device. At Step S20, the terminal device 10 specifies the setting source device and the setting destination device to the server device 20 in response to a user operation. In this example, the MFP 30a is specified as the setting source device, and the MFP 30b is specified as the setting destination device. Herein, it is assumed that the information about the setting items (item information), which constitute the setting information of the setting destination device, is registered in advance in the setting information DB 21.

Then, at Step S21, the terminal device 10 instructs the server device 20 to apply the setting values of the respective setting items of the setting source device to their corresponding setting items of the setting destination device.

In response to the instruction, the server device 20 refers to the setting information DB 21 and applies the setting values of the respective setting items of the setting source device to their corresponding setting items of the setting destination device. At that time, as described later in detail, based on the identification information (common IDs) assigned in common to the setting items having identical definitions, the server device 20 applies the setting values of the setting items of the setting source device to their corresponding setting items of the setting destination device. As a result, even if there are setting items having identical definitions but having different setting item names in the setting information of the setting source device and the setting information of the setting destination device, the setting values of the respective setting items of the setting source device can be applied to their corresponding setting items of the setting destination device.

Subsequently, at Step S22, in response to a user operation, the terminal device 10 downloads (DL) the setting information in which the setting values have been applied to the setting items of the setting destination device. Then, at Step S23, the terminal device 10 stores the setting information, which is downloaded at Step S22, in the memory card 31 b. The user then installs the memory card 31 b, in which the setting information is stored, in the MFP 30b representing the setting destination device. As a result, the setting information, in which the setting values of the setting items of the setting information of the setting source device have been applied, gets copied in the setting destination device.

### Specific example of configuration applicable to embodiment

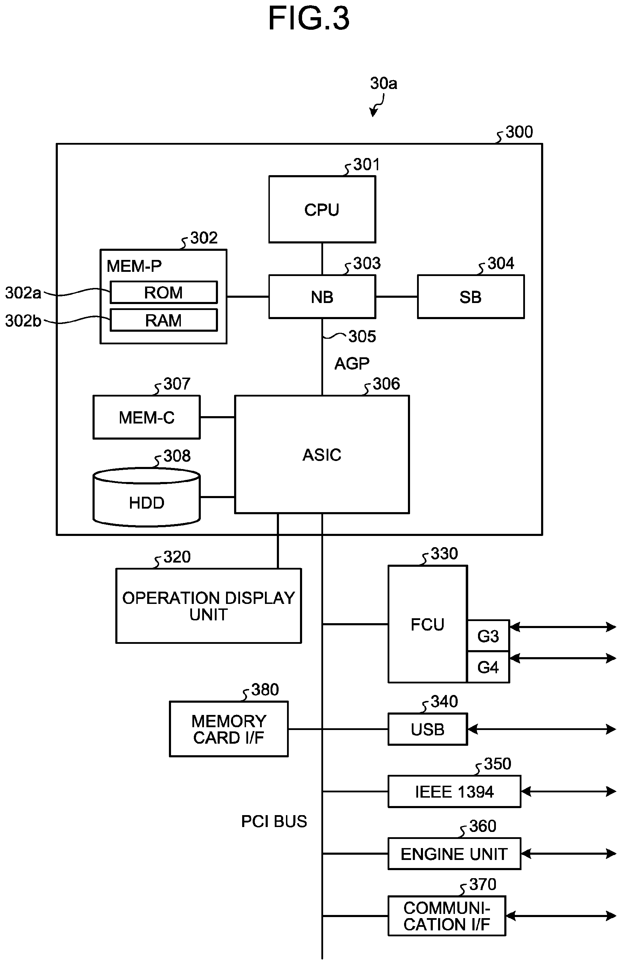

In FIG. 3 is illustrated an exemplary hardware configuration of the MFPs 30a and 30b applicable to the embodiment. Since the MFPs 30a and 30b have a common applicable configuration, the following explanation is given for the MFP 30a as the representative of the MFPs 30a and 30b.

In the example illustrated in FIG. 3, the MFP 30a has a configuration in which a controller 300 and an engine unit 360 are connected by a printer component interface (PCI). The controller 300 performs the overall control of the MFP 30a, controls the drawing and the communication, and controls the input from an operation display unit 320. The engine unit 360 is a printer engine that is connectible to the PCI bus. Examples of the engine unit 360 include a black-and-white plotter, a single-drum color plotter, a four-drum color plotter, a scanner, and a fax unit. Meanwhile, in addition to having what is called the engine part such as the plotter, the engine unit 360 also includes an image processing unit that performs image processing such as error diffusion and gamma conversion.

The controller 300 includes a central processing unit (CPU) 301, a bridge 303 called Northbridge (NB), a system memory (MEM-P) 302, a bridge 304 called Southbridge (SB), a local memory (MEM-C) 307, an application specific integrated circuit (ASIC) 306, and a hard disk drive (HDD) 308. Moreover, the bridge 303 and the ASIC 306 are connected by an AGP bus 305 (AGP stands for Accelerated Graphics Port). Furthermore, the system memory 302 includes a read only memory (ROM) 302a and a random access memory (RAM) 302b.

The CPU 301 performs the overall control of the MFP 30a. Moreover, the CPU 301 includes a chipset made of the bridge 303, the system memory 302, and the bridge 304; and is connected to other devices via the chipset.

The bridge 303 is a bridge for connecting the CPU 301 to the system memory 302, the bridge 304, and the AGP bus 305. The bridge 303 includes a memory controller for controlling reading and writing with respect to the system memory 302; includes a PCI master; and includes an AGP target.

The system memory 302 is a system memory that is used as a memory for storing computer programs and data, a memory for loading computer programs and data, and a memory for printer plotting. The system memory 302 includes the ROM 302a and the RAM 302b. The ROM 302a is a read-only memory and is used as a memory for storing computer programs and data. The RAM 302b is a readable-writable memory and is used as a memory for loading computer programs and data and as a memory for printer plotting.

The bridge 304 is used to connect the bridge 303 to PCI devices and printer devices. Herein, the bridge 304 is connected to the bridge 303 via a PCI bus. Moreover, to the PCI bus is connected a communication interface (I/F) 370 that performs communication with a network such as a local area network (LAN).

The ASIC 306 is an integrated circuit (IC) that is intended for image processing purposes and that includes hardware elements for image processing; as well as fulfils the role of a bridge for connecting the AGP bus 305, the PCI bus, the HDD 308, and the local memory 307. The ASIC 306 includes a PCI target and an AGP master; an arbiter that constitutes the core of the ASIC 306; a memory controller that controls the local memory 307; a plurality of direct memory access controllers (DMACs) that rotate image data using hardware logic; and a PCI unit that performs data transfer with the engine unit 360 via the PCI bus.

To the ASIC 306 are connected a facsimile control unit (FCU) 330, a universal serial bus (USB) 340, and an IEEE 1394 interface 350 (IEEE: The Institute of Electrical and Electronics Engineers) via the PCI bus. The FCU 330 includes an interface compatible to the G3 standard and an interface compatible to the G4 standard. Moreover, in the example illustrated in FIG. 3, to the ASIC 306 is connected a memory card I/F 380 via the PCI bus. The memory card I/F 380 includes a memory card slot in which the memory card 31 a can be installed; and performs writing and reading with respect to the memory card, which is installed in the memory card slot, according to instructions from the CPU 301.

Moreover, to the ASIC 306, the operation display unit 320 is directly connected.

The local memory 307 is used as a buffer for images to be copied and as a coding buffer. The HDD 308 is a storage used in storing image data, computer programs, font data, and forms. The setting information of the MFP 30a is also stored in the HDD 308.

The AGP bus 305 is a bus interface for a graphics accelerator card and has been proposed for enhancing the speed of image processing. The AGP bus 305 directly accesses the system memory 302 at a high throughput and enhances the speed of the graphics accelerator card.

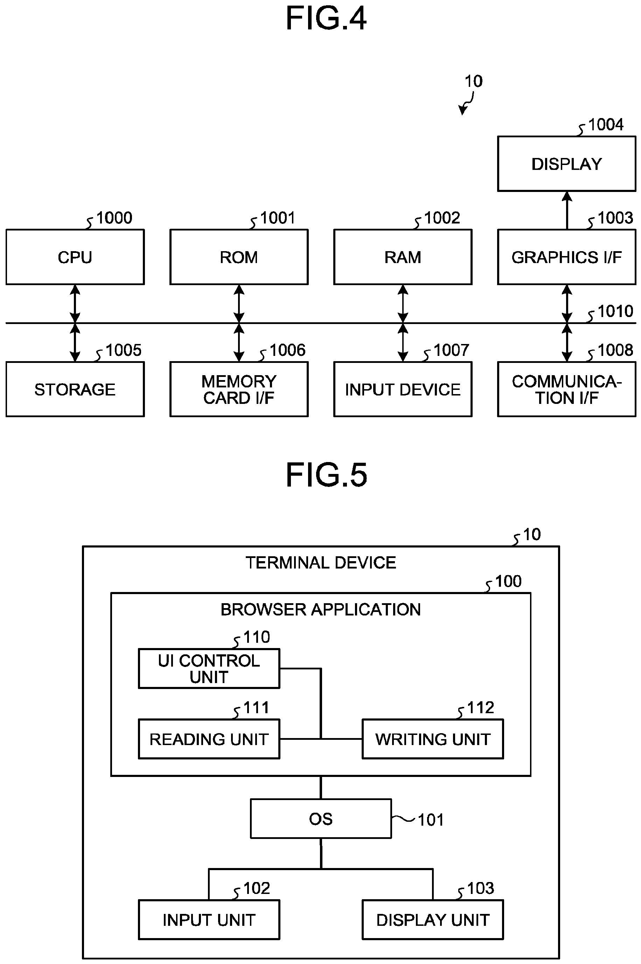

In FIG. 4 is illustrated an exemplary hardware configuration of the terminal device 10 that is applicable to the embodiment. With reference to FIG. 4, the terminal device 10 includes a CPU 1000, a ROM 1001, a RAM 1002, a graphics I/F 1003, a storage 1005, a memory card I/F 1006, an input device 1007, and a communication I/F 1008 that are communicably connected to each other by a bus 1010. In this way, the terminal device 10 according to the embodiment can have a configuration equivalent to a commonly-used computer.

The storage 1005 is a nonvolatile memory medium such as a hard disk drive or a flash memory that is used to store computer programs and data. The CPU 1000 follows instructions from the computer programs stored in the storage 1005 or the ROM 1001, uses the RAM 1002 as the work memory, and controls the overall operations of the terminal device 10. The graphics I/F 1003 is connected to a display 1004 and, based on display control information that is generated by the CPU 1000 by following instructions from the computer programs, generates signals that are displayable on the display 1004.

The memory card I/F 1006 includes memory card slots in which the memory cards 31 a and 31 b can be installed, and performs writing and reading with respect to the memory cards, which are installed in the memory card slots, according to instructions from the CPU 1000. The input device 1007 receives input attributed to user operations. Examples of the input device 1007 include a keyboard, a mouse, and a pointing device such as a touchpad. Alternatively, the input device 1007 can be configured as a touch-sensitive panel that is integrally configured with the display 1004 and that receives input attributed to user operations performed according to the display on the display 1004.

The communication I/F 1008 is connected to the network 40 and performs communication via the network 40. The communication I/F 1008 either can be directly connected to the network 40, or can be connected to the network 40 via another network such as a LAN. Moreover, the communication I/F 1008 can be connected to the network 40 either using wired communication or using wireless communication.

FIG. 5 is an exemplary functional block diagram for explaining the functions of the terminal device 10 that are applicable to the embodiment. With reference to FIG. 5, the terminal device 10 includes a browser application 100 (in the following explanation, referred to as the browser 100), an operating system (OS) 101, an input unit 102, and a display unit 103. The browser 100, the OS 101, the input unit 102, and the display unit 103 are implemented using computer programs running in the CPU 1000. However, that is not the only possible case; and some constituent elements, such as the input unit 102 and the display unit 103, from among the browser 100, the OS 101, the input unit 102, and the display unit 103 can be configured using hardware circuitry.

The browser 100 performs display based on HTML data (HTML stands for HyperText Markup Language). Examples of the browser 100 include commonly-used browser applications such as Internet Explorer (registered trademark) and Safari (registered trademark).

The OS 101 serves as an intermediary between the hardware of the terminal device 10 and the computer programs; performs monitoring and operation control of each computer program running in the CPU 1000; and controls the overall operations of the terminal device 10. The input unit 102 receives input of user operations performed with respect to the input device 1007, and sends the input information to the OS 101. The display unit 103 generates display control information based on the information received from the OS 101.

The browser 100 includes a user interface (UI) control unit 110, a reading unit 111, and a writing unit 112. The UI control unit 110, the reading unit 111, and the writing unit 112 represent, what is called, a web application and are configured when the computer programs, which are obtained by the terminal device 10 from the server device 20 via the network 40 using the browser 100, are executed in the CPU 1000. In the following explanation, the computer programs including the UI control unit 110, the reading unit 111, and the writing unit 112 are referred to as built-in tools.

More particularly, the CPU 1000 uses the browser 100 and, for example, obtains the web application containing modules of the UI control unit 110, the reading unit 111, and the writing unit 112. Then, the CPU 1000 temporarily stores the obtained web application in the RAM 1002 or the storage 1005. Subsequently, when the CPU 1000 reads that web application from the RAM 1002 or the storage 1005 and executes the same; the UI control unit 110, the reading unit 111, and the writing unit 112 get loaded in a main memory device such as the RAM 1002. Thus, the UI control unit 110, the reading unit 111, and the writing unit 112 are generated in the main memory device.

The UI control unit 110 controls the user interface for displaying information to the user, displaying screens for user operations, and processing the input attributed to user operations performed in response to the display of screens. The reading unit 111 controls the reading of data from the memory card 31 a installed in the memory card I/F 1006. The writing unit 112 controls the writing of data in the memory card 31 a installed in the memory card I/F 1006.

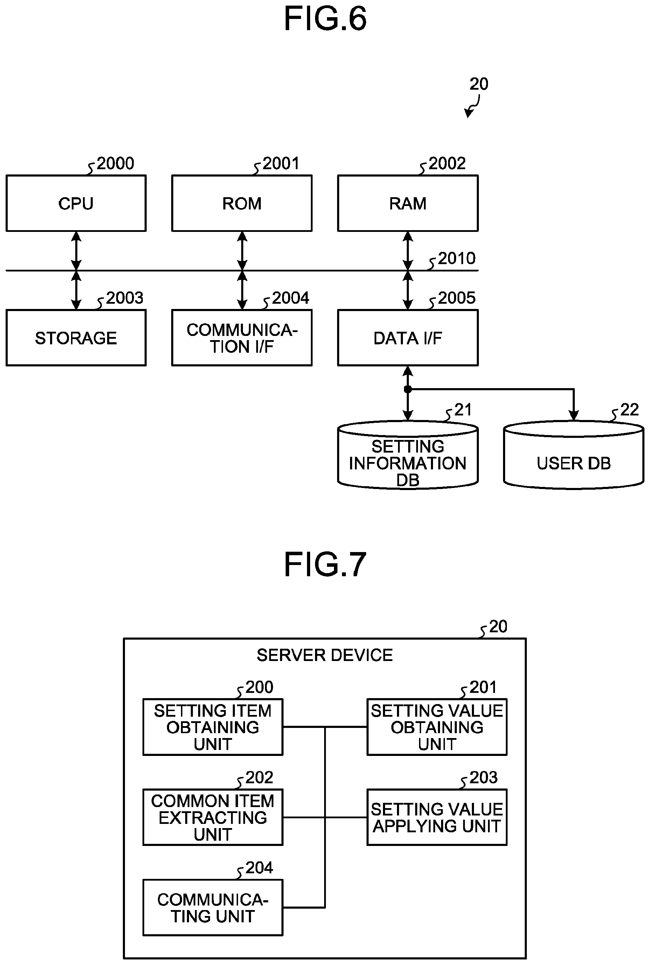

In FIG. 6 is illustrated an exemplary hardware configuration of the server device 20 according to the embodiment. With reference to FIG. 6, the server device 20 includes a CPU 2000, a ROM 2001, a RAM 2002, a storage 2003, a communication I/F 2004, and a data I/F 2005 that are communicably connected to each other by a bus 2010.

The storage 2003 is a nonvolatile memory medium such as a hard disk drive or a flash memory that is used to store computer programs and data. The CPU 2000 follows instructions from the computer programs stored in the storage 2003 or the ROM 2001, uses the RAM 2002 as the work memory, and controls the overall operations of the server device 20. The communication I/F 2004 is connected to the network 40 and performs communication via the network 40.

The data I/F 2005 is an interface by which the server device 20 communicates data with the outside. In the example illustrated in FIG. 6, to the data I/F 2005 are connected the setting information DB 21 and the user DB 22. For example, in a nonvolatile memory medium such as a hard disk drive, the setting information DB 21 and the user DB 22 are stored in the form of predetermined tables.

Meanwhile, with reference to FIGS. 6 and 1, the setting information DB 21 and the user DB 22 are configured to be connected to the outside of the server device 20. However, that is not the only possible case. Alternatively, for example, either one or both of the setting information DB 21 and the user DB 22 can be configured in a predetermined area in the storage 2003, or the setting information DB 21 and the user DB 22 can be configured in a common memory medium.

FIG. 7 is an exemplary functional block diagram for explaining the functions of the server device 20 according to the embodiment. With reference to FIG. 7, the server device 20 includes a setting item obtaining unit 200, a setting value obtaining unit 201, a common item extracting unit 202, a setting value applying unit 203, and a communicating unit 204.

The setting item obtaining unit 200, the setting value obtaining unit 201, the common item extracting unit 202, the setting value applying unit 203, and the communicating unit 204 are configured using an information processing program running in the CPU 2000. However, that is not the only possible case. Alternatively, some or all of the setting item obtaining unit 200, the setting value obtaining unit 201, the common item extracting unit 202, the setting value applying unit 203, and the communicating unit 204 can be configured using hardware circuits operating in cooperation with each other.

The setting item obtaining unit 200 obtains setting items from the setting information. The setting value obtaining unit 201 obtains the setting values corresponding to the respective setting items from the setting information. The common item extracting unit 202 extracts the setting items that have identical definitions in the setting information of the setting source device and the setting information of the setting destination device. The setting value applying unit 203 applies, to the respective setting items extracted by the common item extracting unit 202, the setting values of their corresponding setting items of the setting source device. The communicating unit 204 performs communication via the network 40.

The information processing program that is written to implement the functions of the server device 20 according to the embodiment is recorded as an installable file or an executable file in a computer-readable recording medium such as a compact disk (CD), a flexible disk (FD), or a digital versatile disk (DVD). However, that is not the only possible case. Alternatively, the information processing program can be stored in a downloadable manner in computer connected to a network such as the Internet. Still alternatively, the information processing program can be distributed via a network such as the Internet.

The information processing program contains the modules of the abovementioned constituent elements (the setting item obtaining unit 200, the setting value obtaining unit 201, the common item extracting unit 202, the setting value applying unit 203, and the communicating unit 204). As far as the actual hardware is concerned, the CPU 2000 reads the information processing program from a memory medium such as the storage 2003 and executes it, so that the abovementioned constituent elements get loaded in a main memory device such as the RAM 2002. Thus, the setting item obtaining unit 200, the setting value obtaining unit 201, the common item extracting unit 202, the setting value applying unit 203, and the communicating unit 204 are generated in the main memory device.

### Operations according to embodiment

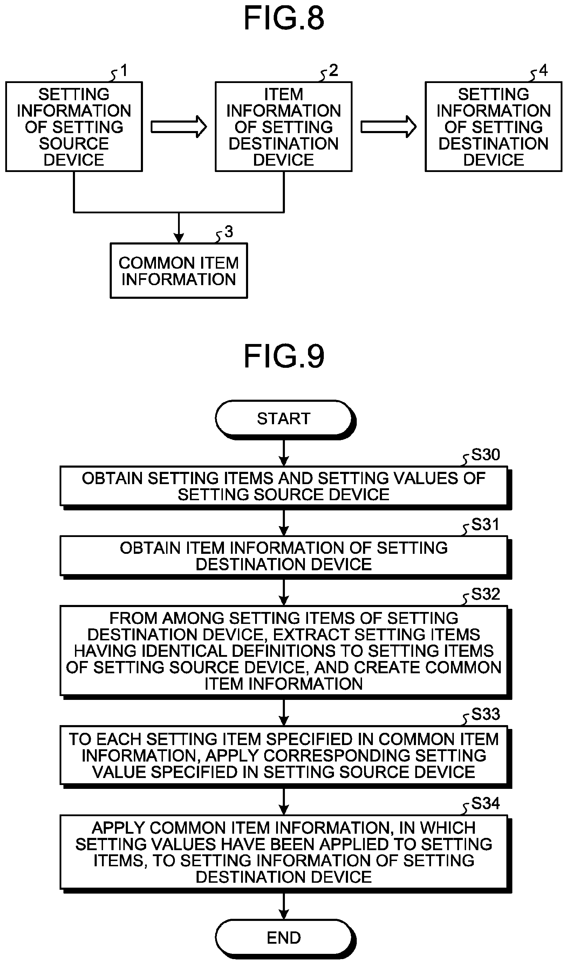

Given below is the more detailed explanation of the operations performed according to the embodiment. In FIG. 8 is schematically illustrated a copying operation according to the embodiment for copying the setting information from the setting source device to the setting destination device. The operations illustrated in FIG. 8 are performed in the server device 20 in response to, for example, an instruction from the terminal device 10.

The server device 20 obtains setting information 1 of the setting source device, and obtains item information 2 that indicates the setting items corresponding to the model of the setting destination device. The server device 20 obtains common item information 3 that indicates such setting items which have identical definitions in the setting information 1 of the setting source device and the item information 2 of the setting destination device. Then, the server device 20 applies the setting values specified in the setting information 1 of the setting source device to the common item information 3, and generates setting information 4 of the setting destination device to be copied in the setting destination device.

FIG. 9 is a flowchart for explaining an example of the copying operation illustrated in FIG. 8. With reference to FIG. 9, at Step S30, the server device 20 follows an instruction from the terminal device 10 and obtains the setting information 1 of the setting source device. For example, the server device 20 can obtain the setting information 1 of the setting source device from the setting information DB 21. Then, using the setting item obtaining unit 200 (a first obtaining unit), the server device 20 obtains item information indicating the setting items from the setting information 1 of the setting source device. Moreover, using the setting value obtaining unit 201 (a second obtaining unit), the server device 20 obtains the setting value of each setting item.

Subsequently, at Step S31, the server device 20 further follows an instruction from the terminal device 10 and, using the setting item obtaining unit 200 (a first obtaining unit), obtains item information indicating the setting items corresponding to the model of the setting destination device (i.e., obtains the item information 2 of the setting destination device).

At Step S32, using the common item extracting unit 202, from among the setting items specified in the setting information 1 of the setting source device as obtained at Step S30 and the setting items specified in the item information 2 of the setting destination device as obtained at Step S31, the server device 20 extracts the setting items having identical definitions and creates the common item information 3 indicating the extracted setting items.

Then, at Step S33, using the setting value applying unit 203, the server device 20 applies, to each setting item specified in the common item information 3 as created at Step S32, the setting value of the corresponding setting items specified in the setting information 1 of the setting source device as obtained at Step S30.

Subsequently, at Step S34, the server device 20 reflects the common item information 3, in which the setting values have been applied to the setting items at Step S33, in the setting information 4 of the setting destination device. More particularly, the server device 20 applies the setting value of each setting item specified in the common item information 3 to the corresponding setting item specified in the setting information 4 of the setting destination device. Then, the terminal device 10 downloads, from the server device 20, the setting information 4 of the setting destination device in which the setting values of the setting items specified in the common item information 3 have been applied.

### Specific example of operations according to embodiment

Given below is the explanation of a specific example of the operations performed according to the embodiment. Firstly, the explanation is given about the resource file that associates information indicating the definitions of the setting items, which are specified in the setting information, with identification information. The resource file is created, for example, for the model of each of the MFPs 30a and 30b. Herein, Tables 1 and 2 represent examples of the resource files corresponding to models "xxxx" and "yyyy", respectively.

**Table 1**

| Model: xxxx | | |
|---|---|---|
| Function name | Setting item name | Common ID |
| ABC | aaa | 001 |
| BCD | bbb | 002 |
| DEF | ccc | 003 |
| EFG | ddd | 004 |

**Table 2**

| Model: yyyy | | |
|---|---|---|
| Function name | Setting item name | (Common ID |
| ABC | aaa | 001 |
| DEF | ckk | 003 |
| EFG | rrr | 004 |
| GHI | eee | 030 |

In the examples of Tables 1 and 2, the resource files include records each of which corresponds to one setting item. Each record includes items "function name", "setting item name", and "common ID". The item "function name" indicates the category of the function defined in the setting item corresponding to the concerned record. The item "setting item name" indicates the name assigned to the function that is defined in the setting item corresponding to the concerned record. The item "common ID" indicates the identification information (common ID) enabling identification of the function defined in the setting item corresponding to the concerned record.

In the items "function name" and "common ID" of the items included in such records, functions having identical definitions between a plurality of models are assigned with common values. More particularly, a single function is associated with the value of the item "common ID", that is, associated with the common ID. Thus, the value of the item "common ID" is unique with respect to the function. In the item "function name", an identical value is associated in common with respect to the functions of the same category. In contrast, in the item "setting item name", functions having identical definitions between a plurality of models can be assigned with different values.

In the examples illustrated in Tables 1 and 2, a value "001" in the item "common ID" in the models "xxxx" and "yyyy" is associated with an identical value "aaa" in the item "setting item name". On the other hand, a value "003" in the item "common ID" in the model "xxxx" is associated with a value "ccc" in the item "setting item name"; but the identical value "003" in the item "common ID" in the model "yyyy" is associated with a value "ckk", which is different from the value "ccc" in the model "xxxx".

Moreover, in the examples given in Tables 1 and 2, when the records of the models "xxxx" and "yyyy" are compared, the resource file of the model "yyyy" does not include the record that has the item "common ID" set to the value "002" and that is included in the model "xxxx". Similarly, the resource file of the model "xxxx" does not include the record that has the item "common ID" set to the value "030" and that is included in the model "yyyy".

These resource files are created in advance on a model-by-model basis, for example, by the system administrator who administers the system including the server device 20 or by the vendor or the manufacturer of the MFPs 30a and 30b; and are registered in the setting information DB 21. Each resource file is created in such a way that the functions associated with the values of the item "common ID" in the resource files have no contradiction therebetween.

Explained below with reference Tables 3 to 6 is a specific example of the operations illustrated in FIGS. 8 and 9. In Table 3 is illustrated an example of the setting information 1 of the setting source device as obtained at Step S30 illustrated in FIG. 9. Herein, "xxxx" is assumed to be the model name of the model of the setting source device. The setting information contains records each of which corresponds to one setting item, and each setting item has a setting value associated thereto.

In the example given in Table 3, each record of the setting information includes the items "function name", "setting item name", and "setting value". Moreover, in Table 3, the item of common IDs is illustrated only for the purpose of comparison with Table 1, and is not included in the setting information 1 of the setting source device. Furthermore, the item "model" indicating the model name is included in common in all records. Of these items, the items "function name" and "setting item name" correspond to the items in the resource file explained with reference to Table 1. More particularly, since Table 3 indicates the setting information of the model "xxxx", it corresponds to Table 1 indicating the resource file of the model "xxxx".

**Table 3**

| Model | Function name | Setting item name | Setting value | (Common ID) |
|---|---|---|---|---|
| xxxx | ABC | aaa | 100 | 001 |
| | BCD | bbb | False | 002 |
| | DEF | ccc | 200 | 003 |
| | EFG | ddd | OFF | 004 |

In Table 4 is illustrated an example of the item information 2 of the setting destination device as obtained at Step S31 illustrated in FIG. 9. Herein, "yyyy" is assumed to be the model name of the model of the setting destination device. Moreover, in Table 4 too, the item of common IDs is illustrated only for the purpose of comparison with Table 2, and is not included in the setting information 2 of the setting source device. As illustrated in Table 4, the items "function name" and "setting item name" included in the item information 2 of the setting destination device correspond to the items in the resource file explained with reference to Table 2. More particularly, since Table 2 indicates the setting information of the model "yyyy", it corresponds to Table 2 indicating the resource file of the model "yyyy".

**Table 4**

| Model | Function name | Setting item name | (Common ID) |
|---|---|---|---|
| yyyy | ABC | aaa | 001 |
| | DEF | ckk | 003 |
| | EFG | rrr | 004 |
| | GHI | eee | 030 |

In Table 5 is illustrated an example in which the items, excluding the item "setting value", of the setting information 1 of the setting source device as illustrated in Table 3 are merged with the item information 2 of the setting destination device as illustrated in Table 4. Herein, the item "common ID" can be obtained by referring to the resource files illustrated in Tables 1 and 2 based on, for example, the item "setting item name" illustrated in Tables 3 and 4. That is, in the example illustrated in Table 3, such values of the item "common ID" in the resource file illustrated in Table 1 are obtained that match with the values of the item "setting item name".

**Table 5**

| Model | Function name | Setting item name | (Common ID) |
|---|---|---|---|
| Xxxx | ABC | aaa | 001 |
| | BCD | bbb | 002 |
| | DEF | ccc | 003 |
| | EFG | ddd | 004 |
| yyyy | ABC | aaa | 001 |
| | DEF | ckk | 003 |
| | EFG | rrr | 004 |
| | GHI | eee | 030 |

The server device 20 compares the values of the item "common ID" included in the records illustrated in Table 5, and extracts the records having the same values of the item "common ID" among the models (Step S32 illustrated in FIG. 9). Then, the server device 20 creates the common item information 3 using the extracted records. In the example illustrated in Table 5, the records having "001 ", "003", and "004" as the values of the item "common ID" are included in the records of the models "xxxx" and "yyyy". Thus, from the item information 2 of the setting destination device as illustrated in Table 4, the server device 20 extracts the records having "001 ", "003", and "004" as the values of the item "common ID", and creates the common item information 3.

Herein, the server device 20 does not include, in the common item information 3, such records which are included in the setting information 1 of the setting source device and which have the values that, from among the values of the item "common ID" in the records included in the setting information 1 of the setting source device, are not present as the values of the item "common ID" in the records included in the item information 2 of the setting destination device. In the example illustrated in Table 5, from among the values of the item "common ID" in the records of the model "xxxx" representing the setting source device, the value "002" is not present as a value of the item "common ID" in the records of the model "yyyy" representing the setting destination device. For that reason, the record corresponding to the value "002" of the item "common ID" of the model "xxxx" is not included in the common item information 3.

In an identical manner, the server device 20 does not include, in the common item information 3, such records which are included in the item information 2 of the setting destination device and which have the values that, from among the values of the item "common ID" in the records included in the item information 2 of the setting destination device, are not present as the values of the item "common ID" in the records included in the setting information 1 of the setting source device. In the example illustrated in Table 5, from among the values of the item "common ID" in the records of the model "yyyy" representing the setting destination device, the value "030" is not present as a value of the item "common ID" in the records of the model "xxxx" representing the setting source device. For that reason, the record corresponding to the value "030" of the item "common ID" of the model "yyyy" is not included in the common item information 3.

Then, the server device 20 applies, to each record included in the common item information 3, the value of the item "setting value" of such a record which has the corresponding value of the item "common ID" in the setting information 1 of the setting source device; and creates the setting information 4 of the setting destination device (Step S33 illustrated in FIG. 9).

In Table 6 is illustrated an example of the setting information 4 of the setting destination device as created based on Table 5 in the abovementioned manner. The setting information 4 of the setting destination device contains the records having such values of the item "common ID" which are identical in the setting information 1 of the setting source device and in the item information 2 of the setting destination device. The values of the items "function name" and "setting item name" included in the item information 2 of the setting destination device are applied to the corresponding items in the setting information 4 of the setting destination device. Moreover, the values of the item "setting value" of the records included in the setting information 4 of the setting destination device are applied to the values of the item "setting value" of those records which have identical values of the item "common ID" to the values in the setting information 1 of the setting source device.

Meanwhile, in Table 6, the item "common ID" is illustrated only for the purpose of comparison with Table 5, and is not included in the actual setting information 1 of the setting source device.

**Table 6**

| Model | Function name | Setting item name | Setting value | (Common ID) |
|---|---|---|---|---|
| yyyy | ABC | aaa | 100 | 001 |
| | DEF | ckk | 200 | 003 |
| | EFG | rrr | OFF | 004 |

In Tables 7 to 10 are illustrated examples in which more specific values are applied to the records included in Tables 3 to 6. In Table 7 is illustrated a specific example of the setting information 1 of the setting source device corresponding to Table 3. In a model "MFP001 ", the values of the item "setting item name" in the records are set to "energy saving return setting", "screen display switching", "icon display position", and "manual-feed paper jam prevention/discharging setting" that are associated to common ID values "1000001", "1000002", "1000003", and "1000004", respectively. Moreover, the values of the item "setting value" in the records are set to "ON", "blue-gray", "X100, Y100", and "OFF".

**Table 7**

| Model | Function name | Setting item name | Setting value | (Common ID) |
|---|---|---|---|---|
| MFP001 | System initial setting | Energy saving return setting | ON | 1000001 |
| | System initial setting | Screen display switching | Blue-gray | 1000002 |
| | Operation panel setting | Icon display position | X100, Y100 | 1000003 |
| | Copying initial setting | Manual-feed paper jam prevention/discharging setting | OFF | 1000004 |

In Table 8 is illustrated a specific example of the item information 2 of the setting destination device corresponding to Table 4. In a model "MFP002", the values of the item "setting item name" in the records are set to "energy saving return setting", "screen display color setting", "icon display position", and "page print size setting" that are associated to common ID values "1000001", "1000002", "1000003", and "3300000", respectively.

**Table 8**

| Model | Function name | Setting item name | (Common ID) |
|---|---|---|---|
| MFP002 | System initial setting | Energy saving return setting | 1000001 |
| | System initial setting | Screen display color setting | 1000002 |
| | Operation panel setting | Icon display position | 1000003 |
| | Copying initial setting | Page print size setting | 3300000 |

From among those values, in the record corresponding to the common ID value "1000002", the value of the item "setting item name" is set to "screen display color setting". However, the record in which the common ID has a match in the setting information 1 of the setting source device illustrated in Table 7 has the value of the item "setting item name" set to "screen display switching", which is different from the value of the item "setting item name" in the record having the corresponding identical common ID in the item information 2 of the setting destination device.

In Table 9 is illustrated an example in which the items, excluding the item "setting value", of the setting information 1 of the setting source device as illustrated in Table 7 and corresponding to Table 5 are merged with the item information 2 of the setting destination device as illustrated in Table 8. In an identical manner to the example illustrated in Table 5, the item "common ID" can be obtained by referring to the resource files corresponding to the models based on, for example, the item "setting item name" illustrated in Tables 7 and 8.

**Table 9**

| Model | Function name | Setting item name | Common ID |
|---|---|---|---|
| MFP001 | System initial setting | Energy saving return setting | 1000001 |
| | System initial setting | Screen display switching | 1000002 |
| | Operation panel setting | Icon display position | 1000003 |
| | Copying initial setting | Manual-feed paper jam prevention/discharging setting | 1000004 |
| MFP002 | System initial setting | Energy saving return setting | 1000001 |
| | System initial setting | Screen display color setting | 1000002 |
| | Operation panel setting | Icon display position | 1000003 |
| | Copying initial setting | Page print size setting | 3300000 |

In Table 10 is illustrated a specific example of the setting information 4 of the setting destination device as created based on Tables 7 to 9 and corresponding to Table 6. As described above, the setting information 4 of the setting destination device contains the records having the values of the item "common ID" that are identical in the setting information 1 of the setting source device and in the item information 2 of the setting destination device. In the example illustrated in Table 10, the setting information 4 of the setting destination device contains the records having the values "1000001 ", "1000002", and "1000003" of the item "common ID" illustrated in Table 9.

**Table 10**

| Model | Function name | Setting item name | Setting value |
|---|---|---|---|
| MFP002 | System initial setting | Energy saving return setting | ON |
| | System initial setting | Screen display color setting | Blue-gray |
| | Operation panel setting | Icon display position | X100, Y100 |

From among the records of the models "MFP001" and "MFP002", the records having "1000002" as the value of the item "common ID" have different values of the item "screen item name", namely, the value "screen display switching" of the item "setting item name" in the model "MFP001" and the value "screen display color setting" of the item "setting item name" in the model "MFP002" (see Tables 7 to 9). In the setting information 4 of the setting destination device as illustrated in Table 10, regarding the concerned record, as the value of the item "setting item name", the value "screen display color setting" of the item "setting item name" in the corresponding record of the model "MFP002" representing the setting destination device is applied. Moreover, regarding the concerned record, as the value of the item "setting value", the value "blue-gray" in the corresponding record of the model "MFP001" representing the setting source device is applied.

Meanwhile, the setting information 4 of the setting destination device can alternatively be created by selectively using such records, from among the records having such values of the item "common ID" which are identical in the setting information 1 of the setting source device and in the item information 2 of the setting destination device, in which the setting values have been changed from the respective initial values in the setting information 1 of the setting source device.

In this way, in the embodiment, based on the common ID values corresponding to the setting item names included in the setting information 1 of the setting source device and the item information 2 of the setting destination device, the server device 20 extracts the records included in the item information 2 of the setting destination device. Then, the server device 20 applies, to the records extracted from the item information 2 of the setting destination device, the values of the item "setting value" of the records in which the common ID values are identical to the corresponding common ID values in the setting information 1 of the setting source device.

Accordingly, in the embodiment, regarding the functions having identical definitions in the setting source device and in the setting destination device, even if the function names and the setting item names of those functions are different between the setting source device and the setting destination device, the setting information 1 of the setting source device can be easily copied in the setting information 4 of the setting destination device.

### UI of terminal device according to embodiment

As described above, the operation of obtaining the setting information 1 of the setting source device and the item information 2 of the setting destination device, the operation of extracting the common item information, and the operation of creating the setting information 4 of the setting destination device are performed by the server device 20. Such operations that are performed in the server device 20 are performed in response to instructions from the terminal device 10. Given below is the explanation of a user interface (UI) of the terminal device 10 according to the embodiment for the purpose of making the server device 20 to perform various operations.

### Registration operation for registering setting information according to embodiment

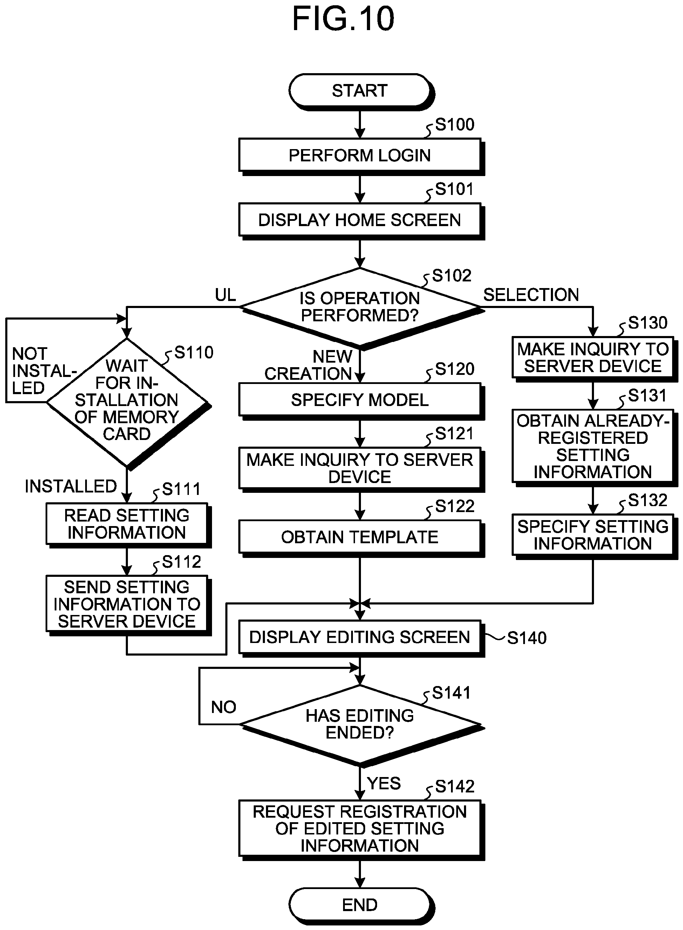

FIG. 10 is a flowchart for explaining an example of a registration operation according to the embodiment for registering the setting information in the server device 20.

The operations illustrated in the flowchart in FIG. 10 are performed by the UI control unit 110, the reading unit 111, and the writing unit 112 that are configured when the computer programs (built-in tools) obtained by the terminal device 10 from the server device 20 using the browser 100 are executed in the CPU 1000. In the following explanation, the model "MFP0001" represents the model of the MFP 30a illustrated in FIG. 1, the model "MFP0002" represents the model of the MFP 30b illustrated in FIG. 1, and the setting information of the model "MFP001" is copied in the model "MFP002".

In FIG. 10, when the built-in tools obtained by the server device 20 are executed in the terminal device 10 in response to a user operation, the terminal device 10 performs a login operation to log in to the server device 20 (Step S100). In the login operation, the terminal device 10 makes the UI control unit 110 to display a login screen on the display 1004 of the terminal device 10. In the following explanation, the operation by which the UI control unit 110 displays a screen on the display 1004 of the terminal device 10 is simply written as "the UI control unit 110 displays a screen".

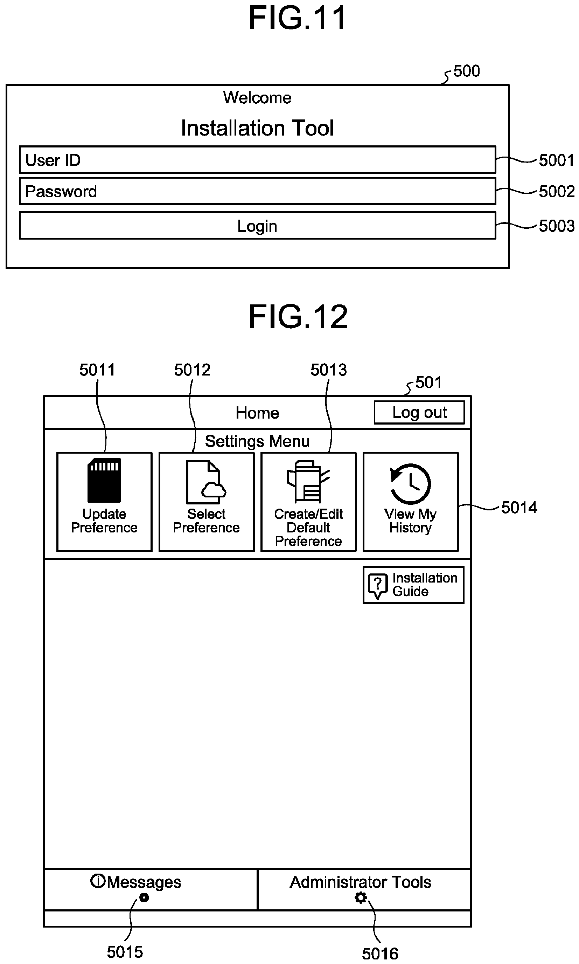

In FIG. 11 is illustrated an example of the login screen that is applicable to the embodiment and that is displayed by the UI control unit 110 on the display 1004 of the terminal device 10. With reference to FIG. 11, a login screen 500 includes input areas 5001 and 5002 and a button 5003. The input areas 5001 and 5002 are meant for inputting the user ID and the password, respectively, that are registered in advance in the user DB 22 of the server device 20. The button 5003 is a login button meant for requesting the server device 20 to allow login.

In response to an operation of the button 5003, the UI control unit 110 requests the OS 101 to send, to the server device 20, the user ID and the password input in the input areas 5001 and 5002, respectively. In response to the request, the OS 101 controls the communication I/F 1008 and sends the user ID and the password to the server device 20, and issues a login request to the server device 20. In the following explanation, the operation in which the UI control unit 110 requests the OS 101 to perform communication and then the OS 101 performs communication by controlling the communication I/F 1008 in response to the request is simply written as "the UI control unit 110 performs communication".

In response to a request from the terminal device 10, the server device 20 refers to the user DB 22 based on the user ID and the password sent by the terminal device 10, and performs an authentication operation to authenticate the user having the concerned user ID. If the authentication is successful, then the server device 20 sends a notification of successful authentication to the terminal device 10.

Upon receiving the notification of successful authentication from the server device 20, the terminal device 10 instructs the UI control unit 110 to display a home screen (Step S101). In FIG. 12 is illustrated an example of the home screen according to the embodiment as displayed by the UI control unit 110. With reference to FIG. 12, a home screen 501 includes buttons 5011 to 5016 that represent menu buttons and that implement the functions of the built-in tools.

More specifically, the button 5011 enables implementation of an uploading (UL) function for uploading the setting information to the server device 20. The button 5012 enables implementation of a selection function for selecting the setting information that has already been registered in the setting information DB 21. The button 5013 enables implementation of a function for newly creating setting information. The button 5014 enables implementation of a function for referring to the history corresponding to the user ID input at the time of login.

The button 5015 is used to display a message from the system (the server device 20). For example, at the time of displaying the home screen 501, the UI control unit 110 performs communication with the server device 20 and inquires whether there is any message. If there is a message, the UI control unit 110 obtains the message from the server device 20 and, for example, displays an indicator close to the button 5015 as an indication that there is a message. In this state, if the button 5015 is operated, the UI control unit 110 performs pop-up display of a message screen for displaying the message.

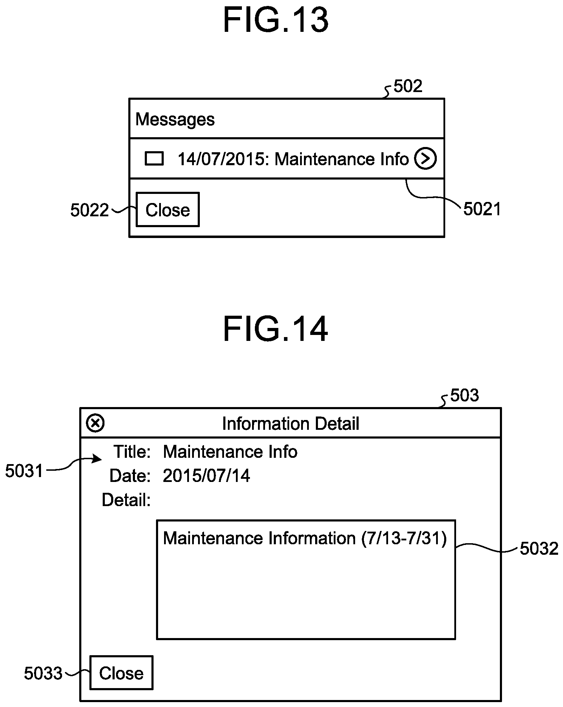

In FIG. 13 is illustrated an example of the message screen applicable to the embodiment as displayed by the UI control unit 110. With reference to FIG. 13, a message screen 502 includes a message display area 5021 and a button 5022. Herein, the button 5022 is meant for closing the message screen 502. In the message display area 5021, the date of issue of the message and the overview of the message are displayed. When the button present at the right-hand edge of the message display area 5021 is operated, a details display screen gets displayed for displaying the details of the message.

In FIG. 14 is illustrated an example of the details display screen applicable to the embodiment as displayed by the UI control unit 110. With reference to FIG. 14, a details display screen 503 includes display areas 5031 and 5032 and a button 5033. In the display area 5031, the date of issue of the message and the overview of the message are displayed in an identical manner to the message display area 5021. In the display area 5032, the details of the message are displayed. The button 5033 is meant for closing the details display screen 503.

Returning to the explanation with reference to FIG. 10, at Step S102, the UI control unit 110 waits for a user operation with respect to the home screen 501 and, when a user operation is performed, performs determination of the user operation. Herein, the explanation is given for a case in which either one of the buttons 5011 to 5013 is operated in the home screen 501.

At Step S102, if it is determined that the button 5011 is operated ("UL" at Step S102), then the system control proceeds to Step S110. Then, at Step S110, the UI control unit 110 waits for the installation of the memory card 31 a in the memory card I/F 1006. If it is determined that the memory card 31 a is not installed in the memory card I/F 1006 ("not installed" at Step S110), then the system control returns to Step S110. When it is determined that the memory card 31 a is installed in the memory card I/F 1006 ("installed" at Step S110), the system control proceeds to Step S111.

At Step S111, the reading unit 111 of the terminal device 10 reads the setting information from the memory card 31 a installed in the memory card I/F 1006. Herein, the setting information that is read is the setting information 1 of the setting source device. At the time of the reading of the setting information from the memory card 31 a, the UI control unit 110 displays an uploading information input screen for inputting the information related to the uploading of the setting information.

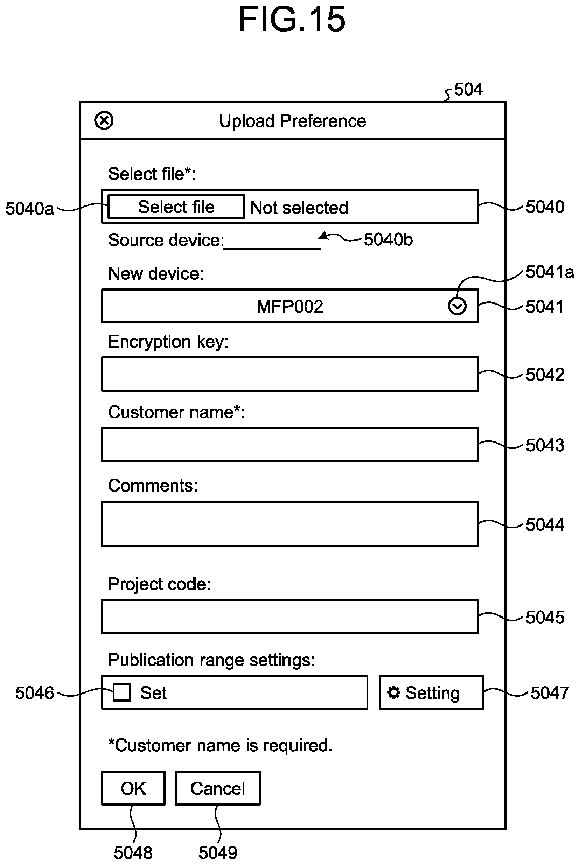

In FIG. 15 is illustrated an example of the uploading information input screen according to the embodiment as displayed by the UI control unit 110. With reference to FIG. 15, an uploading information input screen 504 includes a file selection area 5040, a model name display area 5040b, input areas 5041 to 5046, and buttons 5047 to 5049.

The file selection area 5040 is meant for selecting, from among the files stored in the memory card 31 a that is installed in the memory card I/F 1006, a file in which the setting information is stored. More particularly, when a button 5040a included in the file selection area 5040 is operated, a list of files stored in the memory card 31 a is displayed. At that time, based on the file extension, it is desirable to selectively display the files in which the setting information is stored. In the model name display area 5040b is displayed the model name that is included in the setting information stored in the file selected in the file selection area 5040. Herein, it is assumed that a single file has a single set of setting information stored therein.

The input area 5041 is used to input the model name of the setting destination device that holds the setting information stored in the file selected in the file selection area 5040. In the default state, in the input area 5041 is displayed the model name specified in the setting information that is stored in the file selected in the file selection area 5040.

Meanwhile, if the model of the setting source device is different from the model of the setting destination device, then the model name of the destination device is input in the input area 5041. At that time, when a button 5041 a in the input area 5041 is operated, a list of model names of the models that are selectable as the setting destination device is displayed. For example, when the button 5041 a is operated, the UI control unit 110 inquires the server device 20 about the setting information registered in the setting information DB 21 and the model names related to the resource files. Then, the UI control unit 110 displays a list of model names obtained from the server device 20 in response to the inquiry.

In an input area 5042, key information is input. That is, for example, with respect to the setting information to be transferred to the memory card 31 a, the MFP 30a can set, in response to a user operation, key information meant for encrypting and decrypting the setting information. The MFP 30a encrypts the setting information based on the key information that is set, and transfers the encrypted setting information to the memory card 31 a. When the setting information that is stored in the file selected in the file selection area 5040 is in the encrypted form, key information corresponding to that encryption is input in the input area 5042.

In the input areas 5043, 5044, and 5045 are input a customer name, a comment, and a project code, respectively.

The input area 5046 represents a checkbox for performing setting of whether or not to set a range of disclosure for the setting information that is stored in the file selected in the file selection area 5040. If the input area 5046 is ticked to enable setting of the range of disclosure, the button 5047 becomes enabled. Herein, the button 5047 is used to display a disclosure range setting screen for setting the range of disclosure of the setting information.

As an example, the user DB 22 is used to register user IDs in a corresponding manner to the professional affiliation and the post of the users having the respective user IDs, as well as is used to register a list of professional affiliations and posts. The UI control unit 110 obtains the list of professional affiliations and posts from the user DB 22 in response to an operation of the button 5047, and displays the list on the terminal device 10. It is possible to think that, as the range of disclosure of the concerned setting information, the UI control unit 110 sets the profession affiliations and the posts that are specified according to a user operation. However, that is not the only possible case. Alternatively, the UI control unit 110 can do settings in such a way that the concerned setting information is disclosed in a limited manner only to the users having particular user IDs.

The button 5048 is a button for reading, from the memory card 31 a, the file that is selected in the file selection area 5040. In response to a user operation of the button 5048, the UI control unit 110 instructs the reading unit 111 to read the concerned file from the memory card 31 a. According to the instruction, the reading unit 111 reads the concerned file from the memory card 31 a. Then, the reading unit 111 temporarily stores the read file in the RAM 1002 or the storage 1005, for example.

Explained below with reference to Tables 11 and 12 are specific examples of the setting information stored in a file. The setting information contains header information and a record for each setting item.

In Table 11 is illustrated an example of header information. In the example illustrated in Table 11, the header information contains items "FileID", "Date", "SeriaINo", "Brand", "PnP", "ModelID", "Destination", "Composition", "TotalItemNum", "Encrypt", "Identifier", and "Sum". The items represent contents "setting information file ID", "date of creation of setting information file", "model number of device", "name of manufacturer of device", "name of PnP of device", "device model ID", "destination of device", "configuration information of device", "total number of items", "presence or absence of encryption", "item identifier", and "checksum", respectively.

**Table 11**

| Header information | Content |
|---|---|
| FileID | Setting information file ID |
| Date | Date of creation of setting information file |
| SeriaINo | Model number of device |
| Brand | Name of manufacturer of device |
| PnP | Name of PnP of device |
| ModelId | Device model ID |
| Destination | Destination of device |
| Composition | Configuration information of device |
| TotelItemNum | Total number of items |
| Encrypt | Presence or absence of encryption |
| Identifier | Item identifier |
| Sum | Checksum |

Of those items, a combination of the items "Brand", "PnP", and "ModelID" indicates the model of a device. Herein, the item "PnP" indicates the name in the Plug and Play function. Moreover, the item "SeriaINo" represents a unique value of each device and is used in identifying the device.

In Table 12 is illustrated an example of the items included in the record of each setting item. In Table 12, "attribute name" corresponds to the items illustrated in Tables 1 to 10. That is, each record includes items "ModuleID", "PrefID", "Secret", "Unique", "ItemCode", "Binary", "ValueCode", "Item", and "Value". The items represent contents "module ID", "preference ID", "confidential information", "device-specific information", "item name character code", "setting value binary data", "setting value character code", "item name", and "setting value", respectively.

**Table 12**

| Attribute information | Content |
|---|---|
| ModuleID | Module ID |
| PrefID | Preference ID |
| Secret | Confidential information |
| Unique | Device-specific information |
| ItemCode | Item name character code |
| Binary | Setting value binary data |
| ValueCode | Setting value character code |
| Item | Item name |
| Value | Setting value |

Of those items, the items "Item" and "Value" correspond to the items "setting item name" and "setting value", respectively, illustrated in Tables 1 to 10. Moreover, the items "ModulelD" and "PrefID" represent identification information in the models corresponding to the concerned setting information, and are different from the common IDs representing common identification information among the devices.

Returning to the explanation with reference to FIG. 15, the button 5049 enables destroying the model name display area 5040b and the information input in the input areas 5041 to 5046, and closing the uploading information input screen 504. After the uploading information input screen 504 is closed, the control system returns to Step S101 and the UI control unit 110 displays the home screen 501.

Returning to the explanation with reference to the flowchart illustrated in FIG. 10, when the reading unit 111 reads the setting information from the memory card 31 a at Step S111, the control system proceeds to Step S112 and, at Step S112, the UI control unit 110 sends the setting information, which has been read at Step S111, to the server device 20. At that time, the UI control unit 110 appends, to the setting information, the information input in the input areas 5041 to 5046 of the uploading information input screen 504, and then sends the setting information to the server device 20. Thus, the server device 20 receives the setting information from the terminal device 10, and registers it in the setting information DB 21.

When the setting information is sent to the server device 20 and is registered in the setting information DB 21 at Step S112, the system control proceeds to Step S140. Although described later in detail, at Step S140, the UI control unit 110 displays an editing screen that enables editing of the setting information.

Meanwhile, at Step S102, when it is determined that the button 5013 is operated ("new creation" at Step S102), the system control proceeds to Step S120. Then, at Step S120, the UI control unit 110 specifies the model to which the newly-created setting information is to be applied (called a target model for new creation).

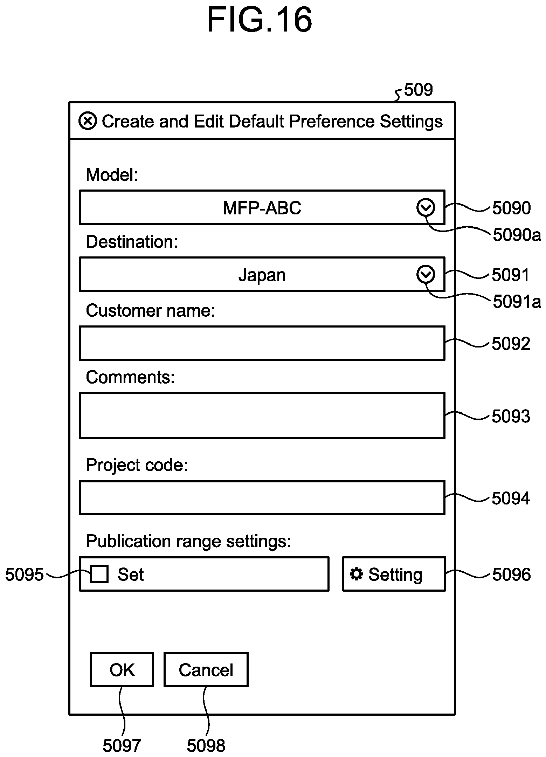

In FIG. 16 is illustrated an example of a creation/editing setting screen that is used to specify the target model for new creation and that is displayed by the UI control unit 110 according to the embodiment. With reference to FIG. 16, a creation/editing screen 509 includes input areas 5090 to 5095 and buttons 5096 to 5098.

In the input area 5090 is input the model name of the model in which the setting information is to be newly created. At that time, when a button 5090a that is included in the input area 5090 is operated, a list of model names of the models that are selectable as the target model for new creation is displayed. In an identical manner to the case of the button 5041 a as explained with reference to FIG. 15, in response to an operation of the button 5090a, the UI control unit 110 obtains the model names from the server device 20 and displays a list of the obtained model names.

In the input area 5091 is input the place of destination of the target model for new creation. When a button 5091 a that is included in the input area 5091 is operated, a list of, for example, area names that are specifiable as the place of destination is displayed. In the input areas 5092 to 5094 are respectively input a customer name, a comment, and a project code that are related to the target model for new creation.

The input area 5095 represents a checkbox that is ticked in the case in which the setting information, which is set for the target model for new creation as specified in the creation/editing screen 509, it to be disclosed to particular users in a limited manner. The button 5096 enables displaying a disclosure range setting screen for setting the range of disclosure of the setting information.

The button 5097 is used to finalize the variety of information that is input in the input areas 5090 to 5095 and to finalize the disclosure range information set in response to an operation of the button 5096, and to send the finalized information to the server device 20. The button 5098 is used to destroy the variety of information input in the input areas 5090 to 5095 and to destroy the disclosure range information set in response to an operation of the button 5096, and to close the creation/editing screen 509. When the creation/editing screen 509 is closed due to an operation of the button 5098, the system control can return to Step S101.

Returning to the explanation with reference to FIG. 10, when the button 5097 is operated in the creation/editing screen 509 illustrated in FIG. 16, the system control proceeds to Step S121. At Step S121, the UI control unit 110 sends the variety of information, which is finalized as a result of the operation of the button 5097, to the server device 20 and requests the server device 20 for a template of the setting information corresponding to the target model for new creation. The template represents, for example, the setting information in which the setting items have initial values.

Subsequently, at Step S122, the UI control unit 110 obtains the template of the setting information as sent by the server device 20 in response to the request. Then, the UI control unit 110 temporarily stores the obtained template in, for example, an administration area meant for the browser 100 in the memory area of the RAM 1002. When the template is obtained, the system control proceeds to Step S140. At Step S140, the UI control unit 110 treats the obtained template as the target setting information for editing and displays an editing screen for editing the setting information (described later in detail).

Meanwhile, at Step S102, if it is determined that the button 5012 is operated ("selection" at Step S102), then the control system proceeds to Step S130.

At Step S130, the UI control unit 110 inquires the server device 20 about the already-registered setting information. Subsequently, at Step S131, the UI control unit 110 obtains the already-registered setting information that is sent by the server device 20 in response to the inquiry at Step S130. Then, the UI control unit 110 temporarily stores the obtained setting information in, for example, the administration area meant for the browser 100 in the memory area of the RAM 1002.

Subsequently, at Step S132, in response to a user operation, the UI control unit 110 specifies the target setting information for editing from among the already-registered setting information obtained at Step S131. When the target setting information for editing is specified, the system control proceeds to Step S140 and the UI control unit 110 displays an editing screen for editing the specified setting information (described later in detail).

The operations from Steps S130 to S132 are explained below in a more specific manner. At Step S130, the UI control unit 110 sends, to the server device 20, the user ID that is authenticated in, for example, the login operation at Step S100, and inquires the server device 20 about the setting information that is editable by the user having the concerned user ID. For example, based on the user ID sent by the terminal device 10, the server device 20 refers to the setting information DB 21 and the user DB 22 and extracts, from the setting information already registered in the setting information DB 21, the setting information for which the user having the concerned user ID is included in the range of disclosure. Then, the server device 20 sends the extracted setting information to the terminal device 10.

The setting information that is sent by the server device 20 is received by the terminal device 10 and obtained by the UI control unit 110 (Step S131). Then, the UI control unit 110 displays a setting information selection screen that enables selection of the target setting information for editing from the obtained setting information.

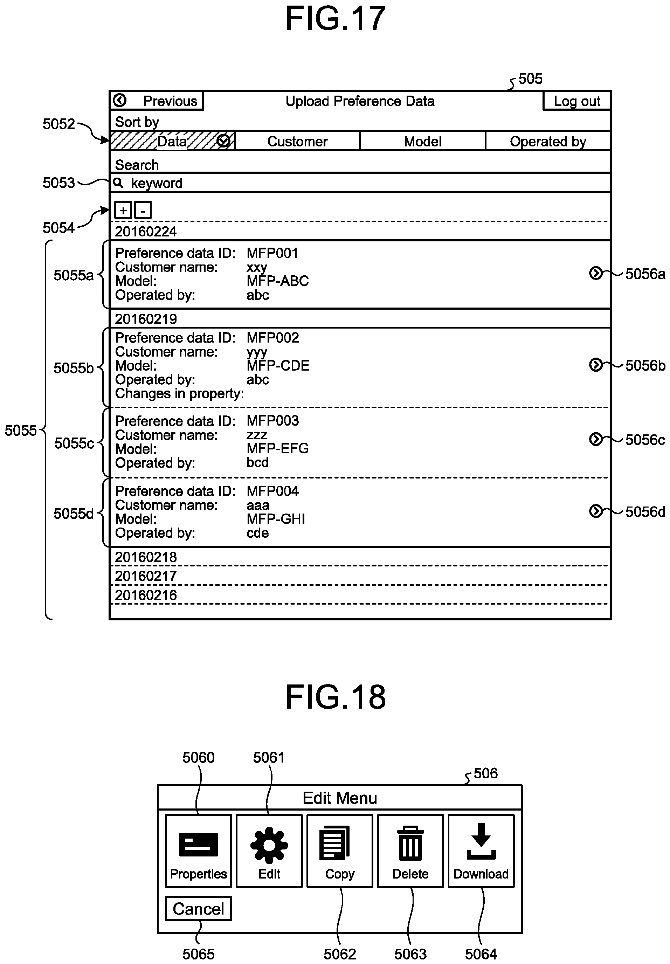

In FIG. 17 is illustrated an example of the setting information selection screen according to the embodiment as displayed by the UI control unit 110. With reference to FIG. 17, a setting information selection screen 505 includes a sort menu area 5052, a search input area 5053, a display control button 5054, and a setting information list display area 5055.

The UI control unit 110 displays the sets of already-registered setting information, which are obtained by the server device 20 at Step S131, in the setting information list display area 5055. In the example illustrated in FIG. 17, the overview of a plurality of sets of setting information is displayed in display areas 5055a to 5055d included in the setting information list display area 5055. When one of buttons 5056a to 5056d, which are included in the display areas 5055a to 5055d, respectively, is operated; the corresponding setting information is specified as the target setting information for editing (Step S132), and the system control proceeds to Step S140. Then, at Step S140, the target setting information for editing, which is specified at Step S132, is edited.

With reference to FIG. 17, in the sort menu area 5052 is specified the sorting method that is to be applied at the time of displaying the sets of setting information, which are obtained from the server device 20, in the setting information list display area 5055. For example, in the sort menu area 5052, it is possible to specify a sorting method that is based on any one of the following: the date of creation of the setting information, the customer name, the model name, and the creator of the setting information. In the example illustrated in FIG. 17, the sorting method based on the date of creation of the setting information is specified. In the search input area 5053 is input a character string for the purpose of searching for the desired setting information from among the sets of setting information obtained from the server device 20.

The display control button 5054 having a pair of "+" and "-" signs is used in specifying whether to perform expanded display or abbreviated display of the display areas 5055a to 5055d in the setting information list display area 5055. In FIG. 17 is illustrated an example in which the display areas 5055a to 5055d are subjected to expanded display.

Moreover, in the setting information list display area 5055, the display areas 5055a to 5055d can be grouped on an attribute-by-attribute basis of the displayed setting information. In the example illustrated in FIG. 17, the display areas 5055a to 5055d are grouped according to the dates of creation of the displayed setting information.

Given below is specific explanation of the operation of proceeding from Step S132 to Step S140. For example, in response to an operation of one of the buttons 5056a to 5056d at Step S132, the UI control unit 110 displays an edit menu screen 506 according to the embodiment as illustrated in FIG. 18.

In the example illustrated in FIG. 18, the edit menu screen 506 includes buttons 5060 to 5064 for specifying the operation to be performed with respect to the target setting information for editing that is specified in the setting information selection screen 505. Moreover, a button 5065 included in the edit menu screen 506 represents a cancel button. For example, in response to an operation of the button 5065, the UI control unit 110 closes the edit menu screen 506, and the control system returns to Step S101.

In the edit menu screen 506, the button 5060 enables displaying an attribute information editing screen for editing the attribute information of the target setting information for editing. The button 5061 enables displaying an editing screen for editing the target setting information for editing. The button 5062 enables displaying a copy screen for copying the target setting information for editing. The button 5063 enables displaying a deletion screen for deleting the target setting information for editing. The button 5064 enables displaying a storage screen for storing the target setting information for editing in the memory card 31 b.

Of the buttons 5060 to 5064, when the button 5061 is operated, the system control proceeds to Step S140. Regarding the operations performed in response to an operation of the other buttons 5061, 5062, 5063, and 5064; the explanation is given later.

Returning to the explanation with reference to the flowchart illustrated in FIG. 10, after the operation performed at Step S112, or Step S122, or Step S132; the system control proceeds to Step S140. Then, at Step S140, the UI control unit 110 displays an editing screen for editing the setting information.

When the system control proceeds from Step S112 to Step S140, the setting information read from the memory card 31 a and sent to the server device 20 is treated as the target for editing in the editing screen. For example, the UI control unit 110 requests the server device 20 for the setting information that has been sent to the server device 20 and registered in the setting information DB 21, and treats the already-registered setting information, which is sent by the server device 20 in response to the request, as the target for editing in the editing screen.

When the system control proceeds from Step S122 to Step S140, the template obtained at Step S122 is treated as the target for editing in the editing screen. When the system control proceeds from Step S132 to Step S140, the setting information specified at Step S132 is treated as the target for editing.

At Step S141, the UI control unit 110 determines whether or not the editing of the setting information in the editing screen has ended. If it is determined that the editing has not ended ("No" at Step S141), then the system control returns to Step S141.

When it is determined that the editing has ended ("Yes" at Step S140), the system control proceeds to Step S142. Then, at Step S142, the UI control unit 110 requests the server device 20 to register the edited setting information in the setting information DB 21. At that time, the UI control unit 110 can specify whether to register the setting information in an overwriting manner with respect to the corresponding existing setting information or, for example, to register the setting information as new setting information with a different name.

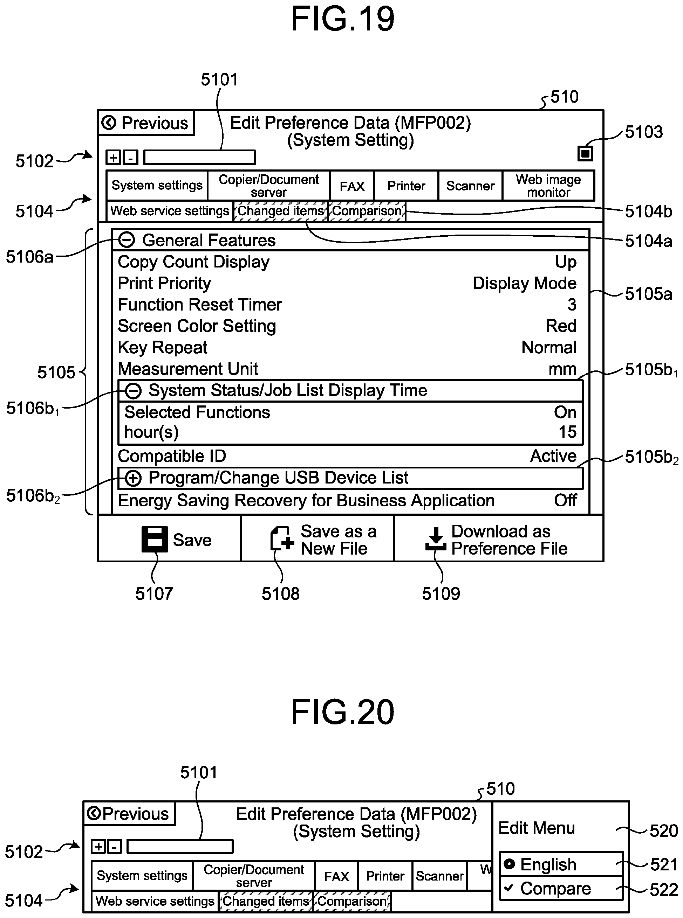

In FIG. 19 is illustrated an example of the editing screen according to the embodiment as displayed by the UI control unit 110. With reference to FIG. 19, an editing screen 510 includes a search input area 5101; buttons 5102, 5103, 5107, 5108, and 5109; a function tab area 5104; and an item display area 5105.

In the editing screen 510, the button 5103 enables displaying an edit menu. In response to an operation of the button 5103, the UI control unit 110 displays an edit menu 520 according to the embodiment as illustrated in FIG. 20. In FIG. 20, the portions identical to the portions illustrated in FIG. 19 are referred to by the same reference numerals, and the relevant detailed explanation is not repeated.

In the example illustrated in FIG. 20, the edit menu 520 includes buttons 521 and 522. The button 521 represents a pulldown menu. In response to an operation of the button 521, the UI control unit 110 selects the language to be used in the editing screen 510. The button 522 enables displaying a comparison information selection screen for selecting the target setting information for comparison that is to be compared with the setting information being edited in the editing screen 510.

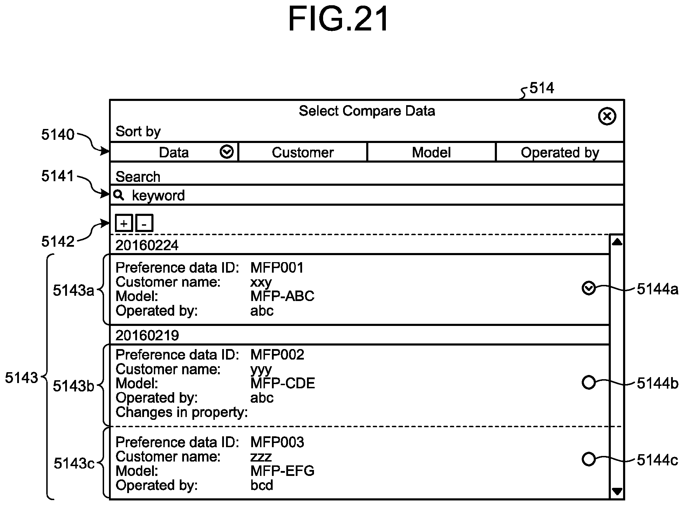

In FIG. 21 is illustrated an example of the comparison information selection screen according to the embodiment as displayed by the UI control unit 110. With reference to FIG. 21, a comparison information selection screen 514 includes a sort menu area 5140, a search input area 5141, a display control button 5142, and a setting information list display area 5143. The sort menu area 5140, the search input area 5141, the display control button 5142, and the setting information list display area 5143 correspond to the sort menu area 5052, the search input area 5053, the display control button 5054, and the setting information list display area 5055, respectively, in the setting information selection screen 505 illustrated in FIG. 17.

In the comparison information selection screen 514, the overview of a plurality of sets of setting information is displayed in display areas 5143a to 5143c that are included in the setting information list display area 5143. When one of buttons 5144a to 5144c, which are included in the display areas 5143a to 5143c, respectively, is operated; the corresponding setting information is specified as the target setting information for comparison. In the example illustrated in FIG. 21, the button 5144a is operated, and the setting information corresponding to the display area 5143a is specified as the target setting information for comparison. For example, if the comparison information selection screen 514 is closed in this state, then the setting information corresponding to the display area 5143a is finalized as the target setting information for comparison.

Returning to the explanation with reference to FIG. 19, in the editing screen 510, the function tab area 5104 includes a plurality of tabs for specifying the type of item to be displayed in the item display area 5105 (described later). In the example illustrated in FIG. 19, in the function tab area 5104, nine tabs are arranged in two levels.

From among the nine times, excluding tabs 5104a and 5104b illustrated in a hatched manner in FIG. 19, the seven tabs represent function tabs each of which is assigned with one of the functions of the device (for example, the MFP 30a) to which corresponds the setting information treated as the target for editing in the editing screen 510. From among the seven tabs, regarding the tabs specified according to a user operation, the UI control unit 110 displays, in the item display area 5105, a list of setting item names of the setting items that correspond to the functions assigned to the specified tabs.

Herein, the setting item names listed in the item display area 5105 include the setting items that get displayed within the item display area 5105 when the display in the item display area 5105 is scrolled by a predetermined operation.

The UI control unit 110 can perform hierarchical display of the setting item names (and values) in the item display area 5105. A first hierarchical level 5105a representing the topmost hierarchical level corresponds to the function specified using a function tab included in the function tab area 5104. In second hierarchical levels 5105b₁ and 5105b₂ that are lower hierarchical levels than the first hierarchical level 5105a, the setting item names of such setting items which are, for example, specified to be groupable are included. For example, the setting items can be grouped based on the item "ModuleID" (see Table 12) included in the setting items.

Regarding the display of the first hierarchical level 5105a and the second hierarchical levels 5105b, and 5105b₂, the UI control unit 110 can switch between simplified display and detailed display in response to an operation of buttons 5106a, 5106b₁, and 5106b₂, respectively, placed at the left end of the respective display areas. In the example illustrated in FIG. 19, the first hierarchical level 5105a and the second hierarchical level 5105b, are subjected to detailed display, while the second hierarchical level 5105b₂ is subjected to simplified display. Moreover, in response to an operation of the button 5102 that has a pair of "+" and "-" signs and that is included in the editing screen 510, the UI control unit 110 can switch between simplified display and detailed display for all hierarchical levels displayed in the item display area 5105.

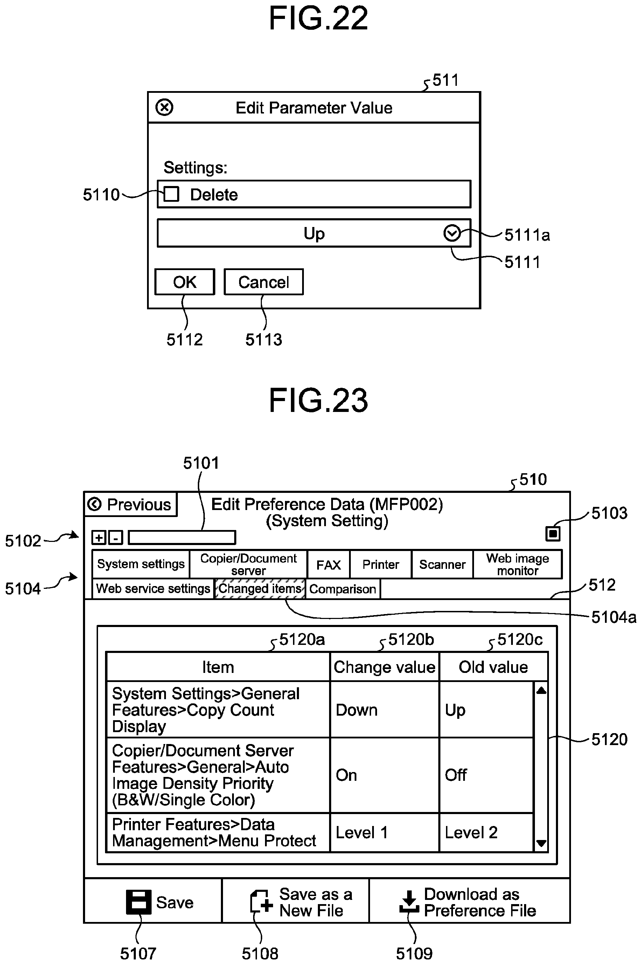

In the item display area 5105, according to the setting item name specified in a user operation, the UI control unit 110 displays a setting value change screen corresponding to the setting item having the specified setting item name. In FIG. 22 is illustrated an example of the setting value change screen according to the embodiment as displayed by the UI control unit 110. With reference to FIG. 22, a setting value change screen 511 includes input areas 5110 and 5111, and buttons 5112 and 5113. The input area 5110 represents a checkbox for setting whether or not to initialize the setting value of the setting item to which the setting value change screen 511 corresponds.

In the input area 5111 is input the setting value of the setting item to which the setting value change screen 511 corresponds. In the example illustrated in FIG. 22, the input area 5111 includes a button 5111 a for displaying a dropdown list; and the value to be input is selectable from the dropdown list displayed in response to an operation of the button 5111 a. However, that is not the only possible case. Alternatively, the input area 5111 can be configured to enable direct input of the setting value. Then, the UI control unit 110 temporarily stores the value, which is input in the input area 5111, in, for example, the administration area meant for the browser 100 in the memory area of the RAM 1002.

The button 5112 is meant for sending the setting value, which is input in the input area 5111 and temporarily stored in the RAM 1002, to the server device 20. In response to an operation of the button 5112, the UI control unit 110 sends the concerned setting value to the server device 20, and requests the server device 20 to update the concerned setting value. Moreover, in response to an operation of the button 5112, the UI control unit 110 destroys the values input in the input areas 5110 and 5111, and closes the setting value change screen 511.

If the button 5112 is operated while the checkbox of the input area 5110 is ticked, the UI control unit 110 initializes or empties the setting value and sends it to the server device 20.

The tab 5104a placed in the function tab area 5104 is a tab for displaying, in the editing screen 510, a list of setting item names and values of such setting items, from among the setting items corresponding to the functions specified using the function tabs in the function tab area 5104, whose values have been changed.

In FIG. 23 is illustrated an example in which a changed-item area 512, which includes the setting item names and the values of the setting items whose values have been changed, according to the embodiment is displayed in the editing screen 510 in response to an operation of the tab 5104a. In the changed-item area 512, a table 5120 is displayed that includes the following items: a setting item name 5120a; a post-change setting value 5120b; and a pre-change setting value 5120c.

For example, in response to an operation of the tab 5104a, the UI control unit 110 obtains the target setting information for editing from the server device 20, and compares the setting values in the obtained setting information with the setting values that are temporarily stored in the administration area for the browser 100 in the RAM 1002. Based on the comparison result, the UI control unit 110 extracts the setting values that are different for the same setting items, and accordingly creates the table 5120.

The tab 5104b placed in the function tab area 5104 is a tab for comparing the setting information, which is selected as the target for comparison in response to an operation of the button 522 of the edit menu 520, with the target setting information for editing.

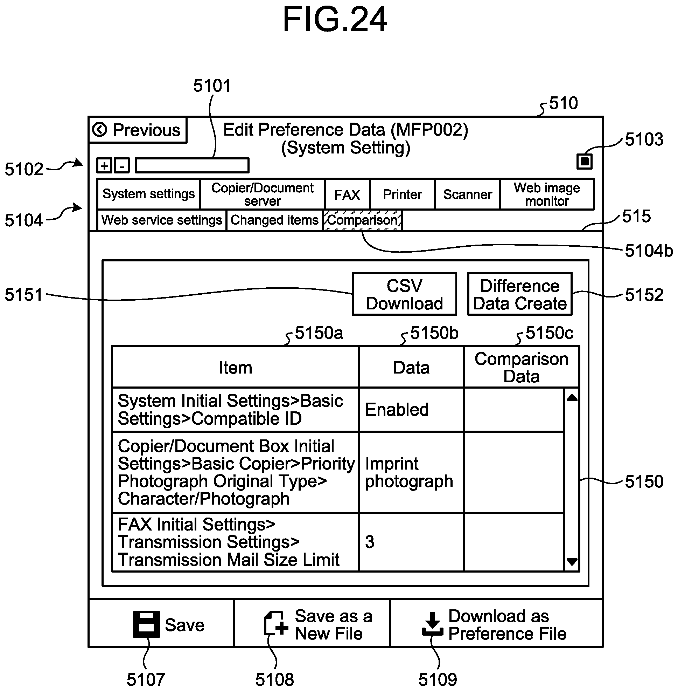

In FIG. 24 is illustrated an example in which a comparison result area 515, which includes the comparison result of comparing the setting information selected as the target for comparison with the target setting information for editing, according to the embodiment is displayed in the editing screen 510 in response to an operation of the tab 5104b. In the comparison result area 515, a table 5150 is displayed that indicates the comparison result and that includes the following items: a setting item name 5150a representing the setting item names of the setting items whose setting values have been changed in the target setting information for editing; a setting value 5150b representing the setting values of the concerned setting items; and a setting value 5150c representing the setting values of the setting items that are included in the target setting information for comparison and that correspond to the concerned setting items.

A button 5151 included in the comparison result area is meant for storing the table 5150, which indicates the comparison result, in a predetermined format such as commaseparated values (CSVs). A button 5152 is meant for creating different setting information based on the setting values included in the table 5150.

Returning to the explanation with reference to FIG. 19, in the editing screen 510, the button 5107 enables instructing registration of the setting information in an overwriting manner. The button 5108 enables instructing registration of the setting information with a different name.

More particularly, in response to a user operation of the button 5107, the UI control unit 110 sends the setting information, which is temporarily stored in the administration area for the browser 100 in the RAM 1002, to the server device 20. At that time, the UI control unit 110 requests the server device 20 to register the sent setting information in an overwriting manner in the setting information DB 21. In response to that request, the server device 20 registers the setting information, which is received from the terminal device 10, in the setting information DB 21 in an overwriting manner with respect to the corresponding already-registered setting information.

Moreover, in response to an operation of the button 5108, the UI control unit 110 displays a screen for setting a name. When a name is set in that screen, the UI control unit 110 sends the setting information, which is temporarily stored in the administration area for the browser 100 in the RAM 1002, and the name, which has been set, to the server device 20. Herein, the UI control unit 110 requests the server device 20 to register the sent setting information with the set name in the setting information DB 21. In response to that request, the server device 20 registers the setting information, which is received from the terminal device 10, with the set name in the setting information DB 21.

In the editing screen 510, the button 5109 enables instructing writing of the setting information in the memory card 31 b. In response to an operation of the button 5109, the UI control unit 110 displays a storage screen for downloading (DL) the setting information and writing it in the memory card 31 b. The explanation about the storage screen is given later.

In the editing screen 510, when either the button 5107 or the button 5108 is operated, it is determined at Step S141 that the editing has ended ("Yes" at Step S141), and the system control proceeds to Step S142. As described above, at Step S142, the UI control unit 110 sends the setting information, whose editing has ended, to the server device 20 and requests the server device 20 to register the setting information in the setting information DB 21. At that time, the UI control unit 110 can specify whether to register the setting information in an overwriting manner with respect to the corresponding existing setting information or to register the setting information as new setting information with a different name.

Once the registration of the setting information in the setting information DB 21 is completed at Step S142, it marks the end of the operations explained with reference to the flowchart illustrated in FIG. 10.

The following explanation is given about the operations performed in response to an operation of the buttons 5060, 5062, 5063, and 5064 in the edit menu screen 506 illustrated in FIG. 18.

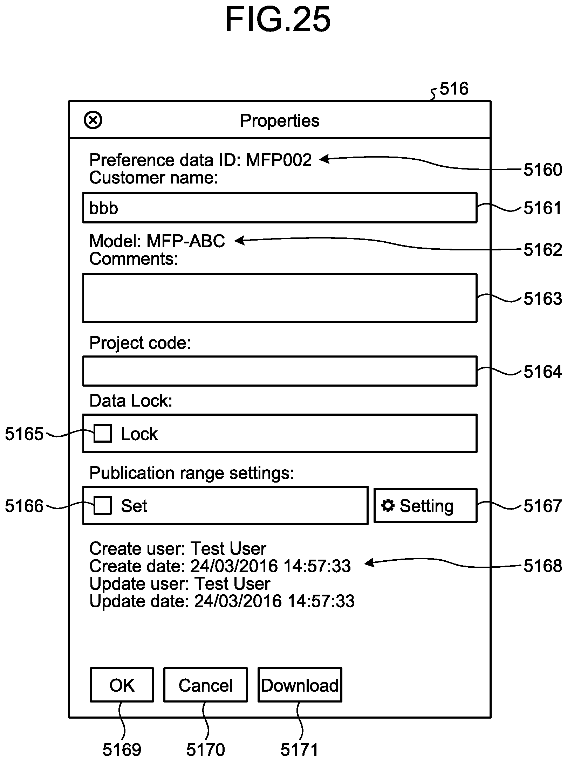

In FIG. 25 is illustrated an example of an attribute information editing screen, which is displayed in response to an operation of the button 5060 in the edit menu screen 506, according to the embodiment as displayed by the UI control unit 110. With reference to FIG. 25, an attribute information editing screen 516 includes display areas 5160, 5162, and 5168; input areas 5161, 5163, 5164, 5165, and 5166; and buttons 5167, 5169, 5170, and 5171.

In the attribute information editing screen 516, in the display areas 5160 and 5162, the identification information of the target setting information for editing (for example, the file ID of the setting information) and the model name corresponding to the concerned setting information (for example, the model ID of the device) is displayed. In the input areas 5161, 5163, and 5164 are input in advance a customer name, a comment, and a project code, respectively, corresponding to the target setting information for editing. The information input in the input areas 5161, 5163, and 5164 is editable.

The input areas 5165 and 5166 represent checkboxes. The input area 5165 is used to performing setting of whether or not to allow editing of the target setting information for editing. The input area 5166 is used to perform setting of whether or not to set the range of disclosure of the target setting information for editing. If the input area 5166 is ticked to allow setting of the range of disclosure, the button 5167 gets enabled and makes it possible to display a disclosure range setting screen for setting the range of disclosure of the concerned setting information.

In the display area 5168, the creator and the date of creation of the target setting information for editing are displayed along with the person who performed updating and the date of updating.

The button 5169 enables updating the attribute information of the target setting information for editing based on the information input in the input areas 5161, 5163, 5164, 5165, and 5166. The button 5170 is used to destroy the information input in the input areas 5161, 5163, 5164, 5165, and 5166, without updating the attribute information of the target setting information for editing. The button 5171 enables instructing the downloading of the attribute information of the target setting information for editing.

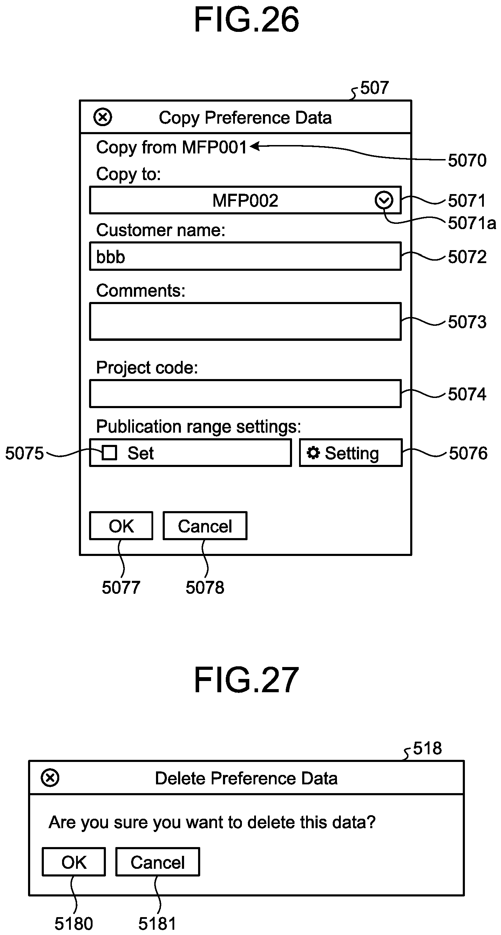

In FIG. 26 is illustrated an example of a setting information copy screen according to the embodiment as displayed in response to an operation of the button 5062 in the edit menu screen 506 displayed by the UI control unit 110. With reference to FIG. 26, a setting information copy screen 507 includes a display area 5070, input areas 5071 to 5075, and buttons 5076 to 5078.

In the display area 5070 is displayed the model name of the setting source device, that is, the device corresponding to the target setting information for editing. In the input area 5071 is input the model name of the setting destination device, that is, the device in which the target setting information for editing is to be copied. When a button 5071 a included in the input area 5071 is operated, the model names of the models specifiable as the setting destination device are listed in, for example, a combo box.

For example, in response to a user operation of the button 5071 a, the UI control unit 110 inquires the server device 20 about the list of model names. In response to the request, the server device 20 refers to the setting information DB 21; extracts the model names from, for example, the resource files registered in the setting information DB 21; and sends a list of model names to the terminal device 10. In the terminal device 10, the UI control unit 110 displays a list of model names based on the list of model names sent by the server device 20.

In the input areas 5072, 5073, and 5074 are input in advance a customer name, a comment, and a project code, respectively, corresponding to the target setting information for editing. The information input in the input areas 5072, 5073, and 5074 is editable.

The input area 5075 represents a checkbox for setting whether or not to set the range of disclosure for the target setting information for editing. When the input area 5075 is ticked to allow setting of the range of disclosure, the button 5076 gets enabled and makes it possible to display a disclosure range setting screen for setting the range of disclosure of the concerned setting information. Meanwhile, regarding the values in the input area 5075 and the disclosure range setting screen, the values of the target setting information for editing are input in advance.

The button 5077 enables instructing the operation of copying the target setting information for editing in the setting information of the model input in the input area 5071. In response to an operation of the button 5077, the UI control unit 110 sends, to the server device 20, the target setting information for editing; the information indicating the model of the setting destination device as input in the input area 5071; and a request for copying the target setting information for editing to the setting information of the setting destination device. Moreover, in response to the operation of the button 5077, the UI control unit 110 further sends, to the server device 20, the information input in the input areas 5072 to 5074 and the information indicating the range of disclosure set according to the input performed in the input area 5075.

The server device 20 receives a variety of information sent by the terminal device 10. From among the variety of information that is received, the server device 20 registers, in the setting information DB 21, the target setting information for editing; the information input in the input areas 5072 to 5074; and the information indicating the range of disclosure set according to the input performed in the input area 5075.

Moreover, in response to the copying request received along with the variety of information, the server device 20 copies the target setting information for editing in the setting information of the setting destination device. Herein, the server device 20 performs the copying operation according to the method explained with reference to FIGS. 8 and 9 and Tables 3 to 10.

That is, the server device 20 obtains the target setting information for editing (corresponding to the setting information 1 of the setting source device illustrated in FIG. 8) as included in the variety of information received from the terminal device 10 (Step S30 illustrated in FIG. 9). Moreover, based on the information indicating the model of the setting destination device as included in the variety of information received from the terminal device 10, the server device 20 obtains the item information (corresponding to the item information 2 of the setting destination device) indicating the setting items corresponding to the concerned model (Step S31 illustrated in FIG. 9).

Subsequently, the server device 20 extracts the setting items having identical definitions from among the setting items specified in the target setting information for editing and the item information indicating the setting items corresponding to the model of the setting destination device, and creates the common item information 3 indicating the extracted setting items (see FIG. 8, Table 5, and Table 9) (Step S32 illustrated in FIG. 9). Then, the server device 20 applies, to the setting items indicated by the common item information 3 that has been created, the setting values of the corresponding setting items specified in the target setting information for editing (Step S33 illustrated in FIG. 9). Subsequently, the server device 20 reflects the common item information 3, in which the setting values are applied to the setting items, in the setting information 4 of the setting destination device (Step S34 illustrated in FIG. 9).

As a result of performing such operations, regarding the functions having identical definitions in the setting source device and in the setting destination device, even if the function names and the setting item names of those functions are different in the setting source device and the setting destination device, the setting information of the setting source device can be easily copied in the setting information of the setting destination device.

In the terminal device 10, after issuing a copying request to the server device 20, the UI control unit 110 closes the setting information copy screen 507 and displays the editing screen 510 illustrated in FIG. 19.

In the setting information copy screen 507, the button 5078 represents a cancel button. In response to an operation of the button 5078, the UI control unit 110 destroys the information input in the input areas 5071 to 5075; does not issue a copying request to the server device 20; closes the setting information copy screen 507; and displays the editing screen 510 illustrated in FIG. 19.

In FIG. 27 is illustrated an example of a deletion screen, which is displayed in response to an operation of the button 5063 of the edit menu screen 506, according to the embodiment displayed by the UI control unit 110. With reference to FIG. 27, a deletion screen 518 includes buttons 5180 and 5181; and a message prompting confirmation about whether or not to perform deletion is displayed in the deletion screen 518.

The button 5180 enables instructing deletion of the target setting information for editing. In response to an operation of the button 5180, the UI control unit 110 deletes the target setting information for editing as stored in the terminal device 10 as well as issues a deletion request to the server device 20 for deleting the already-registered setting information corresponding to the target setting information for editing. After issuing the deletion request, the UI control unit 110 closes the deletion screen 518 and displays the editing screen 510 illustrated in FIG. 19.

A button 5181 is a cancel button. In response to an operation of the button 5181, the UI control unit 110 closes the deletion screen 518 and displays the editing screen 510 illustrated in FIG. 19. In this case, the target setting information for editing is not deleted.

### Storage operation of storing setting information according to embodiment in memory card

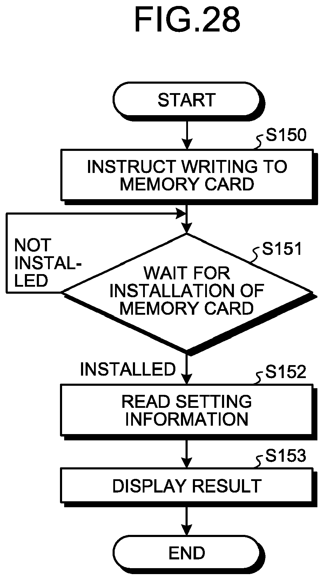

Given below is the explanation of a storage operation of storing the target setting information for editing according to the embodiment in a memory card. FIG. 28 is a flowchart for explaining an example of the storage operation according to the embodiment for storing the target setting information for editing in the memory card 31 b.

At Step S150, the UI control unit 110 receives a writing instruction for writing the target setting information for editing in the memory card 31 b. For example, the UI control unit 110 receives the writing instruction in response to an operation of the button 5064 in the edit menu screen 506 illustrated in FIG. 18. In another example, the UI control unit 110 receives the writing instruction in response to an operation of the button 5109 in the editing screen 510 illustrated in FIG. 19. Upon receiving the writing instruction, the UI control unit 110 displays a storage screen meant for writing (storing) the target setting information for editing in the memory card 31 b.

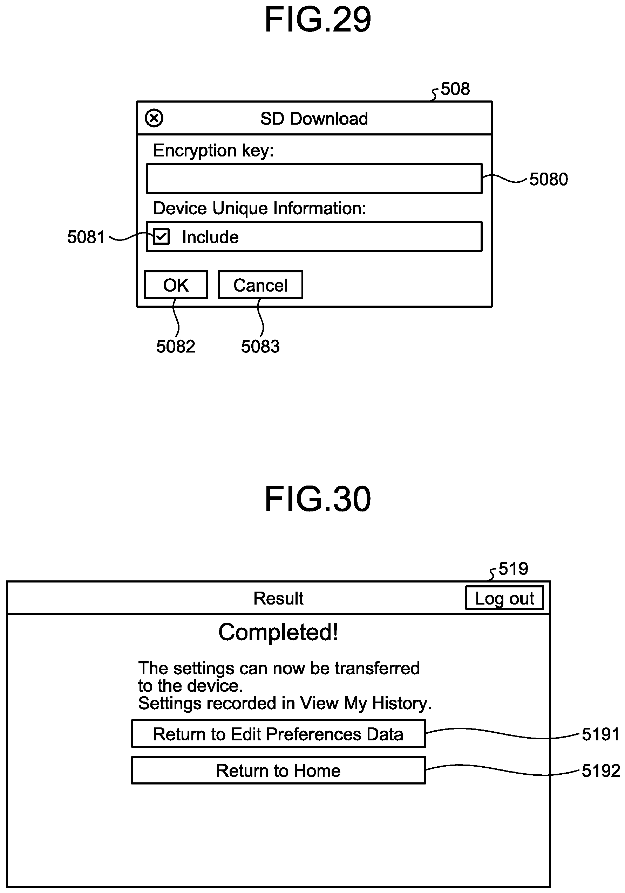

In FIG. 29 is illustrated an example of the storage screen according to the embodiment as displayed by the UI control unit 110. With reference to FIG. 29, a storage screen 508 includes input areas 5080 and 5081 and buttons 5082 and 5083. In the input area 5080 is input key information meant for encrypting the setting information to be stored in the memory card 31 b. If the input area 5080 is left blank, the setting information gets stored in the memory card 31 b without being encrypted.

The input area 5081 represents a checkbox for setting whether or not to include the device-specific information in the setting information to be stored in the memory card 31 b. The device-specific information is, for example, the value of the item "Unique" illustrated in Table 12.

The button 5082 enables instructing the writing of the target setting information for editing in the memory card 31 b. The button 5083 is a cancel button. In response to an operation of the button 5083, the UI control unit 110 closes the storage screen 508 and returns the display to the screen previous to the storage screen 508. In this case, the target setting information for editing is not written in the memory card 31 b.

Returning to the explanation with reference to the flowchart illustrated in FIG. 28, in response to an operation of the button 5082 in the storage screen 508, the system control proceeds to Step S151. Then, at Step S151, the UI control unit 110 determines whether or not the memory card 31 b has been installed in the memory card slot of the memory card I/F 1006. If it is determined that the memory card 31 b is not installed in the memory card slot ("not installed" at Step S151), then the system control returns to Step S151.

If it is determined that the memory card 31 b is installed in the memory card slot ("installed" at Step S151), the system control proceeds to Step S152. Then, at Step S152, the UI control unit 110 instructs the writing unit 112 to write the target setting information for editing in the memory card 31 b. In response to the instruction, the writing unit 112 writes the target setting information for editing in the memory card 31 b. When the writing is completed, the writing unit 112 notifies the UI control unit 110 about the same.

Upon receiving the notification about the completion of writing, the UI control unit 110 displays a result display screen according to the embodiment as illustrated in FIG. 30 at Step S153. With reference to FIG. 30, a result display screen 519 includes buttons 5191 and 5192; and a message indicating that the writing (storing) of the setting information in the memory card 31 b is complete is displayed in the result display screen 519. In case the writing of the setting information in the memory card 31 b is not successful, a message about the same is displayed.

The button 5191 is used to close the result display screen 519 and display the editing screen 510 illustrated in FIG. 19. The button 5192 is used to close the result display screen 519 and display the home screen 501 illustrated in FIG. 12.

When the result display screen 519 is displayed at Step S153, it marks the end of the operations explained with reference to the flowchart illustrated in FIG. 28.

Thus, according to an aspect of the present invention, it becomes easier to manage setting information among different models.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

## Claims

1. An information processing device (20) comprising:
a first obtaining unit (200) configured to obtain first setting items in a first model (MFP001) and obtain second setting items in a second model (MFP002) different from the first model (MFP001);
a second obtaining unit (201) configured to obtain a setting value of each of the first setting items;
an extracting unit (202) configured to extract, as a common setting item, a setting item having common definition in the first setting items and in the second setting items; and
an applying unit (203) configured to apply, to the common setting item, the setting value corresponding to the first setting item from which the extracting unit (202) has extracted the common setting item.

2. The information processing device (20) according to claim 1, wherein
definition of each of the first setting items and the second setting items is associated with identification information, and
the extracting unit (202) extracts, as the common setting item, a setting item having common definition associated with identical identification information in the first setting items and the second setting items.

3. The information processing device (20) according to claim 1 or 2, wherein the extracting unit (202) extracts, as the common setting item, a setting item having common definition in a setting item of the first setting items, whose setting value has been changed from an initial value, and the second setting items.

4. The information processing device according to any one of claims 1 to 3, wherein the applying unit (203) further applies a setting value of the common setting item to a corresponding setting item in the second setting items.

5. An information processing method that is implemented by a computer program, the method comprising:
obtaining first setting items in a first model (MFP001) and obtaining second setting items in a second model (MFP002) different from the first model (MFP001);
obtaining a setting value of each of the first setting items;
extracting, as a common setting item, a setting item having common definition in the first setting items and in the second setting items; and
applying, to the common setting item, the setting value corresponding to the first setting item from which the extracting unit has extracted the common setting item.

6. An information processing system comprising:
a terminal device (10); and
a server device (20), wherein
the server device includes:
a first obtaining unit (200) configured to obtain first setting items in a first model (MFP001) and obtain second setting items in a second model (MFP002) different from the first model (MFP001),
a second obtaining unit (201) configured to obtain a setting value of each of the first setting items,
an extracting unit (202) configured to extract, as a common setting item, a setting item having common definition in the first setting items and in the second setting items, and
an applying unit (203) configured to
apply, to the common setting item, the setting value corresponding to the first setting item from which the extracting unit (202) has extracted the common setting item, and
apply a setting value of the common setting item to a corresponding setting item in the second setting items, and
the terminal device (10) includes
a sending unit configured to obtain setting values of the first setting items from a device (30a) of the first model (MFP001) and sends the setting values to the server device (20), and
a transferring unit configured to receive a setting value of the common setting item from the server device (20) and transfer the received setting value to a device (30b) of the second model (MFP002).

7. An information processing system comprising:
a terminal device (10); and
a server device (20), wherein
the server device includes an information processing device according to any one of claims 1 to 4.

8. An information processing system as claimed in claim 7, wherein the an applying unit (203) is further configured to apply a setting value of the common setting item to a corresponding setting item in the second setting items.

9. An information processing system as claimed in claim 7 or 8, wherein the terminal device (10) includes:
a sending unit configured to obtain setting values of the first setting items from a device (30a) of the first model (MFP001) and sends the setting values to the server device (20), and
a transferring unit configured to receive a setting value of the common setting item from the server device (20) and transfer the received setting value to a device (30b) of the second model (MFP002).
